(19) Europäisches Patentamt / European Patent Office / Office européen des brevets

(11) EP 4 375 240 A1

(12) EUROPEAN PATENT APPLICATION

(43) Date of publication:
**29.05.2024 Bulletin 2024/22**

(21) Application number: **22383121.5**

(22) Date of filing: **22.11.2022**

(51) International Patent Classification (IPC):
***C02F 1/28*** *(2023.01)* ***C02F 1/48*** *(2023.01)*
***B01J 20/20*** *(2006.01)* ***B01J 20/28*** *(2006.01)*
***B01J 20/34*** *(2006.01)* *C02F 1/38 (2023.01)*
*C02F 101/32 (2006.01)*

(52) Cooperative Patent Classification (CPC):
**B01J 20/20; B01J 20/28009; B01J 20/3416; C02F 1/283; C02F 1/288; C02F 1/488;**
B01J 20/3458; B01J 20/3475; B01J 20/3483; C02F 1/38; C02F 2001/007; C02F 2101/32; C02F 2303/16

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Universidad Autónoma de Madrid**
**28049 Madrid (ES)**

(72) Inventors:
- **MUÑOZ GARCÍA, Macarena**
  **E-28049 Madrid (ES)**
- **ORTIZ SUÁREZ, David**
  **E-28049 Madrid (ES)**
- **CHAVES JIMÉNEZ, Raúl**
  **E-28049 Madrid (ES)**
- **MARTÍNEZ DE PEDRO, Zahara**
  **E-28049 Madrid (ES)**
- **CASAS DE PEDRO, José Antonio**
  **E-28049 Madrid (ES)**

(74) Representative: **ABG Intellectual Property Law, S.L.**
**Avenida de Burgos, 16D**
**Edificio Euromor**
**28036 Madrid (ES)**

# (54) PROCESS FOR SEPARATING NANOPLASTICS FROM AQUEOUS MATRICES BY MEANS OF USING CARBON BLACK PARTICLES

(57) The present invention relates to a process for separating nanoplastics from aqueous matrices based on the interaction of said nanoplastics with carbon black particles, which gives rise to the formation of nanoplastic/carbon black particle aggregates that can be readily separated from the water by means of sedimentation, centrifugation, or application of a magnetic field in the case where the carbon black has been previously magnetized or where a magnetic iron material is added for interaction thereof with the nanoplastic/carbon black aggregates.

EP 4 375 240 A1

## Description

### FIELD OF THE INVENTION

The present invention relates to a process for separating nanoplastics from aqueous matrices by means of the interaction thereof with carbon black particles.

### BACKGROUND OF THE INVENTION

The excellent properties of plastics, among which the easy molding, high mechanical and chemical resistance, and the low cost thereof, have led to them being widely used both by industry and by society as a whole, turning them into materials that are ever present in the surrounding world. Routinely used in different applications, plastics are the cornerstone of a global economy based on "waste culture". In that sense, since the development of the first synthetic polymers in the mid-20$^{th}$ century, the production of plastics has not stopped growing. In 2020, production reached 367 million tons (PlasticsEurope, Plastics - The facts 2021, Report (2021). URL: plasticseurope.org.), and this amount is expected to double in the next 20 years (GESAMP Report and Studies 90 (2015), ISSN: 1020-4873).

The high consumption of plastics is leading to the inevitable generation of huge amounts of plastic waste. Depending on its application, the service life of plastic can range from a few minutes to more than 50 years before it is eliminated as waste. Plastic as waste can be deposited in landfills (8%), recycled (9%), or used for energy recovery (12%) (Enfrin, M. et al., Water Research, 161 (2019) 621-638). Unfortunately, the largest percentage of plastic waste ends up being introduced into the environment (71 %) (Enfrin, M. et al., Water Research, 161 (2019) 621-638). This situation poses a huge risk to ecosystems as plastics are hardly degradable materials which can persist for years, decades and even centuries (Forrest, A. et al., Frontiers in Marine Science, 6 (2019) 627).

Once in the environment, plastic waste ends up breaking into smaller-sized fragments through physical and chemical abrasion processes, as well as photo- and biodegradation (Hernandez, L.M. et al., Environmental Science and Technology Letters, 4 (2017) 280-285; Lehner, R. et al., Environmental Science and Technology, 53 (2019) 1748-1765). This results in the generation of the so-called microplastics, plastic particles with a size of less than 5 mm, and finally nanoplastics, plastic particles with a size comprised between 1 and 1000 nm (Gaylarde, C.C. et al., Environmental Pollution, 272 (2021) 115950; Huang, D. et al., Journal of Hazardous Materials 407 (2021) 124399; Song, Z. et al., Science of the Total Environment, 669 (2019) 120-128; Wu, J. et al., Chemosphere, 263 (2021) 127967).

Most studies in the literature focus on studying the pollution caused by microplastics, with nanoplastics receiving very little attention due essentially to the complexity of nanoplastic analysis. However, nanoplastics may have a much greater impact on living beings. Due to their large surface area, nanoplastics have a much higher capacity to transport pollutants and pathogens adsorbed on their surface. Furthermore, due to their small size, they can cross biological membranes, accumulating in organs and tissues and causing toxicological effects (Saleh, T.A., Environmental Technology and Innovation, 20 (2020) 101067; Zhang, B. et al., Science of the Total Environment, 757 (2021) 143791). Recent studies have proven that nanoplastics have a multitude of negative impacts on organisms, such as growth inhibition, effects on reproduction, inflammation, immunotoxicity, and even behavioral changes (Estrela, F.N. et al., Chemosphere, 271 (2021) 129476; Saleh, T.A., Environmental Technology and Innovation, 20 (2020) 101067; Zhang, B. et al., Science of the Total Environment, 757 (2021) 143791).

Although the life cycle of micro- and nanoplastics is rather complex, water is considered the main vector for the spread of these particles in the environment, with wastewater purification plants (WWPP) being a critical point for such pollution. Although these plants are relatively efficient in separating plastic particles from water, they do not allow ensuring the complete removal of plastic particles (Sol, D. et al., Science of the Total Environment, 740 (2020) 140016). Smaller-sized microplastics (<300 μm) and nanoplastics are particularly hard to retain (Ali et al., Chemical Engineering Journal, 423 (2021) 130205). Furthermore, plastics break up into smaller-sized particles throughout the different treatment stages in the WWPP due to mechanical stress, as well as to pumping, mixing, and/or bubbling processes (Xu, Z. et al., Journal of Cleaner Production, 291 (2021) 125982). A recent literature review demonstrated that plastic particles above 1000 μm made up between 80 and 95% of plastic particles entering the WWPP, said fraction representing less than 8% in the effluent finally discharged by the plant (Ali, I. et al., Chemical Engineering Journal, 423 (2021) 130205). Given the high flow rates of water discharged by WWPPs into natural waterways, it is essential to develop advanced processes which allow microplastics, and essentially nanoplastics, to be removed from water.

Due mainly to their small size and high persistence, nanoplastics often escape conventional treatment methods. These particles are not retained in treatment plant settlers, because their small size and low density cause them to form very stable suspensions in water (Karimi Estahbanati, M.R. et al., Marine Pollution Bulletin 168 (2021) 112374). Although filtration, particularly ultrafiltration, allows nanoplastics to be retained to a large extent, it requires the use of filters with a very small pore size (0.01 - 0.1 μm), which means a high energy consumption and the continuous need for cleaning the filtration system (Devi, M.K. et al., Science of the Total Environment 845 (2022) 157168). Coagulation-flocculation

processes are less efficient than ultrafiltration processes for separating nanoplastics from water, particularly for smaller-sized nanoplastics (Devi, M.K. et al., Science of the Total Environment 845 (2022) 157168; Karimi Estahbanati, M.R. et al., Marine Pollution Bulletin 168 (2021) 112374). A recent study demonstrated that this technique did not allow removing more than 80% of these particles even when using a large variety and amount of salts (Batool, A. et al., Journal of Hazardous Materials 413 (2021) 125301). Moreover, conventional biological degradation methods, provided that they do not involve the use of filters, do not allow removing nanoplastics either given their low biodegradability and high persistence.

In this context, the development of innovative processes which allow removing nanoplastics from water is essential. Systems based on the magnetic separation of plastic particles from water are presented as a promising alternative. Patents ES 2 796 998 A1 and WO 2020/240069 A1 belonging to Munoz, M. et al. demonstrated that the use of magnetic iron minerals, particularly magnetite, allowed a very effective separation of microplastics with sizes comprised between 50 and 5000 μm. A recent study (Zhang, Y. et al., Water Research, 178 (2020) 115861) demonstrated that the capacity of different iron minerals such as magnetite, goethite, kaolinite, and montmorillonite is extremely low, with capacities for adsorbing 200 mg of 50 nm polystyrene nanoplastic per kg of mineral at best. All the mentioned minerals were used with a micrometric particle size, so in all the cases they were considerably larger than the nanoplastics to be separated from water. Reducing the particle size of the mineral to the nanometric level could, in principle, increase the effectiveness in removing nanoplastics from water by allowing the coating of said nanoplastics. However, decreasing the size of magnetite (the most effective mineral) below 100 nm results in a drastic reduction of its magnetic properties (Li, Q. et al., Nature Scientific Reports, 7 (2017) 9894). In fact, the magnetic properties of magnetite are practically negligible below 20 nm (Li, Q. et al., Nature Scientific Reports, 7 (2017) 9894). To that end, the magnetic separation of nanoplastics from water using iron minerals is certainly limited.

Recent studies in the literature point to adsorption as a promising method for separating nanoplastics from water. Adsorption is a physicochemical process involving the transfer of matter of a compound from within a fluid (liquid or gas) to the surface of a solid, such that the compound is retained on the surface of the solid. Adsorption is related to the surface characteristics of the solid, where solids with a large specific surface are commonly used in this process. Adsorption processes are often used for separating organic pollutants dissolved or suspended in water, and are characterized by their low operating cost, their high effectiveness for retaining pollutants, and also for being environmentally friendly as they do not leave any residues in the water. The main adsorbents used for water treatment are activated carbons, metal hydroxides (such as alumina), zeolites, and clay materials (Zhao, H. et al., Chemical Engineering Journal, 430 (2022) 133122). In general, they are characterized by large surface areas, as well as by exhibiting functional groups on their surface, particularly oxygenated groups. Both characteristics are key in obtaining high efficiencies in the adsorption process. In addition to oxygen, nitrogen, sulfur, or phosphorus functionalities are often incorporated in adsorbents in order to increase their selectivity for certain substances. Materials with a small surface area such as sand ($SiO_2$), vitreous compounds, or non-porous amorphous carbon compounds, such as carbon black, are not usually used as adsorbents due to their low capacity to retain other compounds on their surface.

In very recent studies in the literature, some adsorbents have been tested in order to learn about their capacity for retaining nanoplastics and for separating them from water. The adsorbents used were mainly activated carbons, and in most cases, they were in micrometric sizes (< 100 μm), although granular carbons (with sizes of several millimeters) have also been used. All these adsorbents have been used for the adsorption of nanoplastics, usually polystyrene nanoplastics, with a mean size of 100 nm. In general, the adsorption capacities of carbonaceous materials ranged from 4 to 100 mg of nanoplastic per gram of adsorbent. Ramirez-Arenas *et al.* (Ramírez-Arenas, L. et al., Science of the Total Environment, 791 (2021) 148175) reported an adsorption capacity of 6 mg of polystyrene nanoplastic (90 nm) per gram of granular activated carbon obtained from coconut shell (1150 $m^2$ $g^{-1}$, $d_{particle}$ = 1.4 mm). The essentially microporous nature of the carbon explains its low adsorption capacity, since nanoplastics cannot access the porous network, being retained only on the outer surface of the activated carbon. In fact, very similar adsorption capacities (4 mg $g^{-1}$) were obtained when using coffee beans in the separation of polystyrene nanoplastics (100 nm) (Yen, P.L. et al., Chemosphere, 286 (2022) 131863). Despite the fact that the specific surface of this material is practically negligible, it has oxygenated groups on its surface, which explains its ability to retain a small amount of nanoplastics. Abdoul *et al.* (Abdoul, A.S.I. et al. Science of the Total Environment, 784 (2021) 147115) obtained rather high adsorption capacities (~50 mg $g^{-1}$) in the separation of polystyrene nanoplastics (100 nm) using activated carbon obtained from corn cobs originating from a mining area (200 $m^2$ $g^{-1}$, $d_{particle}$ < 74 μm). The smaller particle size of this carbon, its essentially mesoporous nature, and its high metal content (3.6% Fe, 1.1% Mn, 1.7% Al, and 4.5% As (percentages by weight), among others, are the main factors which explain the higher adsorption capacity of said carbon. Similar results have been reported in other research in which different types of carbons have been used (Ganie, Z.A. et al., Journal of Hazardous Materials, 417 (2021) 126096; Zhu, N. et al., Journal of Hazardous Materials 433 (2022) 128756; Zhou, G. et al., Science of the Total Environment 820 (2022) 153190). For example, Zhou *et al.* (Zhou, G. et al., Science of the Total Environment 820 (2022) 153190) obtained adsorption capacities of 40 mg $g^{-1}$ in the separation of polystyrene nanoplastics (100 nm) with a carbonaceous material prepared by hydrothermal synthesis and containing Cu and Ni in its structure. The use of Zn/Al

hydroxides (100 nm) has allowed obtaining higher adsorption capacities (165 mg $g^{-1}$) in the separation of polystyrene nanoplastics (50 nm) despite their relatively small specific surface (21 $m^2$ $g^{-1}$), which is attributed mainly to the presence of oxygenated groups on their surface (Tiwari, E. et al., Journal of Hazardous Materials 397 (2020) 122769). Much lower adsorption capacities have been obtained when using materials which are not commonly used as adsorbents. For example, Batool and Valiyaveettil (Batool, A. and Valiyaveettil, S., Journal of Hazardous Materials 413 (2021) 125301) reported adsorption capacity values below 1 mg $g^{-1}$ in the separation of PVC nanoplastics (98 nm) and PMMA nanoplastics (76 nm) using functionalized cellulose fibers.

Therefore, the adsorbents reported up until now in the literature have shown relatively low adsorption capacities for removing nanoplastics from water. In the case of activated carbons, i.e., the most commonly used adsorbents in water treatment, the mean adsorption capacity is about 50 mg $g^{-1}$, a value that is much lower than that reported for the adsorption of organic pollutants dissolved in water such as, for example, phenols, whereby adsorption capacities of about 300 - 400 mg $g^{-1}$ are often achieved (Stavropoulos, G.G. et al., Journal of Hazardous Materials, 151, 2-3 (2008) 414-421; Miao, Q. et al., Journal of the Taiwan Institute of Chemical Engineers 44 (2013) 458-465; Mojoudi, N. et al., Nature Scientific Reports, 9 (2019) 19352). Furthermore, it is important to mention that, in all the reported research, the separation of nanoplastics from water using activated carbons as adsorbents required long balancing times of at least 4 h, and in most cases 24 h (Ramirez-Arenas, L. et al., Science of the Total Environment, 791 (2021) 148175; Abdoul, A.S.I. et al. Science of the Total Environment, 784 (2021) 147115; Zhu, N. et al., Journal of Hazardous Materials 433 (2022) 128756; Zhou, G. et al., Science of the Total Environment 820 (2022) 153190). Modifying activated carbons through different (physical and chemical) activation treatments would possibly improve the adsorption capacity of these materials, but it also involves a significant increase in the cost of the carbon. In fact, the price of activated carbons is relatively high due precisely to the activation processes to which said materials are subjected, as they generally involve heat treatments at high temperatures. Furthermore, activated carbons generally have a high ash content, which entails an additional risk when used in water treatment, as it represents an additional source of pollution.

In the view of the foregoing, the development of a process which allows an effective and quick separation of nanoplastics from aqueous matrices using low-cost, environmentally friendly materials would represent a crucial finding in this field where there is currently no specific and viable technique for separating nanoplastics from the aqueous medium.

## SUMMARY OF THE INVENTION

The inventors have surprisingly discovered a process for separating nanoplastics with high separation rates, using low-cost, environmentally friendly materials using carbon black particles. Carbon black is an amorphous inorganic material made up essentially by carbon. It is obtained in the incomplete combustion of natural gas or other petroleum products. This very dark black powder has not been previously used as an adsorbent given its characteristics, but rather as a pigment in inks and paints, as well as a filler in the manufacture of rubber tires and other plastic products. In fact, it is used in plastics as an additive to impart color, opacity, electrical conductivity, and protection against degradation by ultraviolet radiation. Surprisingly, the process achieves high separation rates of nanoplastics regardless of their size and nature. As shown in the examples, the separation rates are greater than 99%, with carbon black particles showing a high capacity to interact with nanoplastics to form aggregates. The process of the present invention is particularly advantageous because it entails a significant reduction of the time needed to achieve separation, with respect to other methods described in the state of the art. Furthermore, once used for separating nanoplastics, the carbon black particles can be recovered by means of a simple washing with acetone, which allows them to be reused without significant loss of efficiency. An additional advantage of the process of the present invention is the simplicity of the equipment required and the viability of scaling same for treating large volumes of water containing nanoplastics.

To that end, the present invention relates to a process for separating nanoplastics from aqueous matrices comprising nanoplastics, the process comprising:

a) providing an aqueous matrix comprising nanoplastics,
b) adding carbon black or magnetized carbon black particles to the aqueous matrix provided in step a) to form nanoplastic/carbon black or magnetized carbon black particle aggregates, and
c) separating the nanoplastic/carbon black or magnetized carbon black particle aggregates from the mixture obtained in step b).

## DESCRIPTION OF THE FIGURES

Figure 1: Transmission electron microscopy images of carbon black Cabot (1.A), carbon black Alfa Aesar (1.B), activated carbon Norit (1.C), activated carbon Merck (1.D), activated carbon Chemviron (1.E), and polystyrene

nanoplastics (1.F).

Figure 2: Particle size distribution of carbon black Cabot (2.A), carbon black Alfa Aesar (2.B), activated carbon Norit (2.C), activated carbon Merck (2.D), and activated carbon Chemviron (2.E)

Figure 3: Nitrogen adsorption/desorption isotherms at -196°C of carbon blacks (Cabot and Alfa Aesar) and activated carbons (Norit, Merck, and Chemviron).

Figure 4: Depiction of the variation of the evolution of the mass of carbon blacks (Cabot and Alfa Aesar), activated carbons (Norit, Merck, and Chemviron), and polystyrene nanoplastics (140 nm) as a function of temperature in an air atmosphere.

Figure 5: Photograph of the suspension of polystyrene nanoplastics in deionized water (5.A), photograph of the suspension of polystyrene nanoplastics and carbon black Cabot particles in deionized water (5.B), and photograph of the suspension of polystyrene nanoplastics and carbon black Cabot particles in deionized water after the centrifugation process (5.C).

Figure 6: Isotherm of the adsorption of 140 nm polystyrene nanoplastics on carbon black Cabot and on carbon black Cabot Alfa Aesar.

Figure 7: Evolution of the separation yield of 140 nm polystyrene nanoplastics throughout the adsorption test with carbon black Cabot.

Figure 8: Transmission electron microscopy image of magnetized carbon black Cabot.

The red circles show, by way of example, some of the magnetite nanoparticles present on the surface of the carbon black.

Figure 9: Isotherm of the adsorption of 140 nm polystyrene nanoplastics on magnetized carbon black Cabot.

Figure 10: Photograph of the suspension of polystyrene nanoplastics in deionized water (10.A), photograph of the suspension of polystyrene nanoplastics and carbon black Cabot particles in deionized water (10.B), and photograph of the suspension of polystyrene nanoplastics and magnetic carbon black Cabot particles in deionized water after 2 h of contact under the influence of a magnet (10.C).

Figure 11: Particle size distribution of magnetite 0.2 μm used in Example 6.

Figure 12: Photograph of the suspension of polystyrene nanoplastics in deionized water (12.A), photograph of the suspension of polystyrene nanoplastics and carbon black Cabot particles in deionized water (12.B), photograph of the suspension of polystyrene nanoplastics and carbon black Cabot particles in deionized water after 1 h of contact and after the subsequent addition of magnetite (12.C), and photograph of the suspension of polystyrene nanoplastics, carbon black Cabot particles, and magnetite particles in deionized water under the influence of a magnet (12.D).

Figure 13: Photograph of the suspension of polystyrene nanoplastics in deionized water (12.A), photograph of the suspension of polystyrene nanoplastics and black magnetite particles in deionized water (13.B), and photograph of the suspension of polystyrene nanoplastics and black magnetite particles in deionized water under the influence of a magnet (13.C).

Figure 14: Transmission electron microscopy image of magnetized carbon black Cabot after being used in the adsorption test of 140 nm polystyrene nanoplastics before (14.A) and after (14.B) regeneration treatment with acetone.

**DETAILED DESCRIPTION OF THE INVENTION**

The present invention relates to a process for separating nanoplastics from aqueous matrices comprising nanoplastics, the process comprising:

a) providing an aqueous matrix comprising nanoplastics,

b) adding carbon black or magnetized carbon black particles to the aqueous matrix provided in step a) to form nanoplastic/carbon black or magnetized carbon black particle aggregates, and
c) separating the nanoplastic/carbon black or magnetized carbon black particle aggregates from the mixture obtained in step b).

In the context of the present invention, the term "nanoplastic" or "nanoplastics" refers to a plastic material with a mean diameter of less than or equal to 1000 nm, preferably with a mean diameter comprised in the range of 0.1 nm to 1000 nm, more preferably in the range of 1 nm to 1000 nm, even more preferably in the range of 10 nm to 1000 nm, even more preferably 100 nm to 900 nm, most preferably 100 nm to 300 nm. The size of the nanoplastics is measured by means of transmission electron microscopy. To that end, an aliquot of the colloidal suspension of nanoplastics in water (or aqueous matrix) is deposited on a mesh and, once the solvent (in this case, water) has evaporated, analysis is performed using the conditions described in the examples. The diameter of the particles is measured directly.
The nanoplastics can be formed by any plastic material, preferably synthetic organic polymers, such as polyethylene terephthalates (PET), polyethylenes (PE) including high-density polyethylenes (HDPE) and low-density polyethylene (LDPE), polyvinyl chlorides (PVC), polypropylenes (PP), polystyrenes (PS), polycarbonates (PC), and polyurethanes (PU).
"Polyethylene terephthalate" or "PET" is a polymer that can be obtained by means of a reaction of polycondensation between terephthalic acid and ethylene glycol. Polyethylene terephthalate has the following structure.

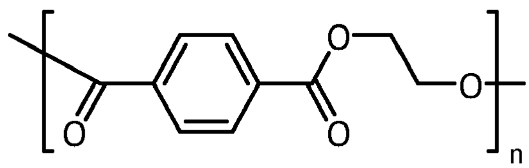

"Polyethylene" or "PE" refers to a polymer that can be obtained by the polymerization of ethylene. Polyethylene has the following structure.

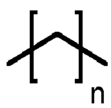

"High-density polyethylene" or "HDPE" refers to a polyethylene the density of which is comprised in the range of 0.930 to 0.970 g $mL^{-1}$. "Low-density polyethylene" or "LDPE" refers to a polyethylene the density of which is comprised in the range of 0.917 to 0.930 g $mL^{-1}$.
"Polyvinyl chloride" or "PVC" refers to a polymer that can be obtained by the polymerization of vinyl chloride. Polyvinyl chloride has the following structure.

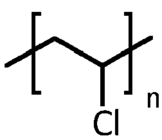

"Polypropylene" or "PP" refers to a polymer that can be obtained by the polymerization of propylene. Polypropylene has the following structure.

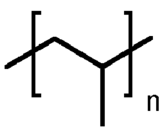

"Polystyrene" or "PS" refers to a polymer that can be obtained by the polymerization of styrene. Polystyrene has the following structure.

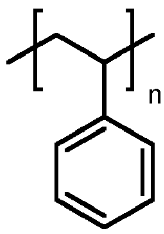

"Polycarbonate" or "PC" refers to a polymer comprising functional groups attached by carbonate groups (-O-C=O)-O-), such as for example diallyl diethylene glycol polycarbonate, or the most widely known, bisphenol A polycarbonate, the structure of which is shown below.

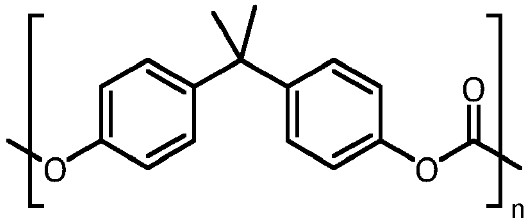

"Polyurethane" or "PU" refers to a polymer that can be obtained by the condensation of polyols, among which ethylene glycol and propylene glycol stand out, and polyisocyanates, among which methylene diphenyl diisocyanate (MDI) and toluene diisocyanate (TDI) stand out, giving rise to urethane groups (-NH-(C=O)-O-) in the structure of the polymer. There is a wide range of polyurethanes due to the range of polyisocyanates and polyols that can be used to form them.

In a preferred embodiment, the nanoplastic is selected from the group consisting of polyethylene terephthalate, high-density polyethylene, polyvinyl chloride, low-density polyethylene, polypropylene, polystyrene, polycarbonate, polyurethane, and mixtures thereof. In a more preferred embodiment, the nanoplastic is formed by the polystyrene polymer.

The expression "aqueous matrix" refers to a composition containing water as its major component, preferably containing at least 80% by weight of water with respect to the total weight of the composition, more preferably at least 85%, even more preferably at least 90%, even more preferably at least 95%. The aqueous matrix may furthermore contain other components that are already dissolved (for example, salts such as NaCl) or in suspension. Particularly, the aqueous matrix is selected from the group consisting of wastewater (including domestic, urban, industrial, agricultural, and livestock farming wastewater), sea water, river water, lake water, groundwater, tap water, or a mixture thereof. Therefore, wastewater purification plants, drinking water treatment plants, the agri-food industry (for example fish farms), sources of water for human consumption, water facilities for recreational purposes (for example, swimming pools), among others, are facilities of interest for the application of the process of the present invention.

Step a) of the process of the invention is to provide an aqueous matrix comprising nanoplastics. The aqueous matrix can be provided continuously if the process is performed continuously or can be provided in batches if the process is performed in batches (or discontinuously). The flow rate of the aqueous matrix provided in step a) is preferably 1 to 10000 L/s in the case of working continuously. Furthermore, the volume of the aqueous matrix provided in step a) is preferably 0.01 to 10000 L in the case of working discontinuously.

The next step, step b), is the addition of carbon black particles to the aqueous matrix provided in step a) to form nanoplastic/carbon black particle aggregates.

The term "carbon black" refers to any solid inorganic substance with a high carbon content, i.e., of at least 95% by weight with respect to the weight of the substance, preferably at least 96% by weight, more preferably at least 97% by weight, and produced by the incomplete combustion of natural gas or other organic products such as petroleum derivatives. Carbon black is a very dark black and extremely fine (tens to a few hundreds nm) amorphous powder which is made up essentially of elemental carbon, although it may have a low content (less than 5% by weight of the substance, preferably less than 4% by weight, more preferably less than 3% by weight) of other elements (hydrogen, oxygen, nitrogen, and/or sulfur). The inorganic impurities and organic waste contained therein which can be extracted from the solid is practically negligible (<2% by weight of the substance). In fact, it is an extremely stable material that is insoluble in water and organic solvents. It has an apparent density of 1.8-2.1 g $cm^{-3}$ and a high surface-volume ratio (10 - 10000 $m^2$ $cm^{-3}$). It is also known as "soot black", "acetylene black", "lamp black", "furnace black", "channel black", "thermal black", or "gas black", depending on the process generating it. It is commonly used as a pigment for inks and paints, as well as in the manufacture of tires, rubber, and plastic products, among other uses. In fact, it is used in plastics as an

additive to impart color, opacity, electrical conductivity, and protection against ultraviolet degradation. The tire industry consumes 70% of carbon blacks, 20% is also used in the manufacture of other rubber products, and the remaining 10% in other applications, mainly as an additive in different types of plastics.

Carbon black has a nodule-based amorphous structure. The term "carbon black particle" refers to the spherical nodules forming the three-dimensional structure of carbon blacks. The term "carbon black particle size" refers to the diameter of said nodules. Carbon black has a particle size of less than 500 nm, preferably the mean diameter of which is comprised between 1 nm and 500 nm, more preferably between 1 nm and 300 nm, even more preferably between 1 nm and 100 nm, even more preferably between 10 nm and 80 nm, even more preferably between 10 nm and 50 nm, even more preferably between 20 and 50 nm, most preferably between 20 nm and 30 nm. Preferably, the particle size distribution must be sufficiently narrow in the established size range. The determination of particle size and its distribution can be performed by means of transmission electron microscopy, for example, using the conditions described in the examples. For the determination of the particle size distribution, it is advisable to use the statistical values D10, D50, and D90, which intercept 10%, 50%, and 90% by volume of the accumulated particles. In the preferred range, D10 (which indicates that 10% by volume of the particles in the sample have a diameter smaller than this value) is less than or equal to 25 nm, D50 (which indicates that 50% by volume of the particles in the sample have a diameter smaller than this value and represents the mean grain size) is less than or equal to 30 nm, and D90 (which indicates that 90% by volume of the particles in the sample have a diameter smaller than this value) is less than or equal to 50 nm. In the more preferred range, D10 (which indicates that 10% by volume of the particles in the sample have a diameter smaller than this value) is less than or equal to 22 nm, D50 (which indicates that 50% by volume of the particles in the sample have a diameter smaller than this 5 value, and represents the mean grain size) is less than or equal to 26 nm, and D90 (which indicates that 90% by volume of the particles in the sample have a diameter smaller than this value) is less than or equal to 30 nm. The particle size of carbon blacks is measured by means of transmission electron microscopy. To that end, an aliquot of the aqueous colloidal suspension of carbon black is deposited on a mesh and, once the solvent (in this case, water) has evaporated, analysis is performed using the conditions described in the examples. The diameter of the particles is measured directly.

The carbon black may have variable specific surface values. The term "specific surface" refers to the ratio between the total surface area and the mass of the solid. Preferably, the carbon black has a specific surface value greater than 50 $m^2 g^{-1}$, even more preferably between 70 $m^2 g^{-1}$ and 500 $m^2 g^{-1}$, even more preferably between 70 $m^2 g^{-1}$ and 200 $m^2 g^{-1}$, even more preferably between 100 $m^2 g^{-1}$ and 300 $m^2 g^{-1}$, most preferably between 190 $m^2 g^{-1}$ and 210 $m^2 g^{-1}$. The specific surface of carbon blacks is determined by means of performing nitrogen adsorption-desorption isotherms. The experimental measurements of nitrogen adsorption-desorption are carried out at -196°C.

The three-dimensional structure of the carbon black may have certain porosity. The term "porosity" refers to the empty spaces present in a solid material. A "porous structure" refers to the size of the pores present in the material, with distinction being made for macroporous solids (material the mean pore size of which has a diameter >50 nm), mesoporous solids (material the mean pore size of which has a diameter between 2 and 50 nm), and microporous solid (material the mean pore size of which has a diameter <2 nm). The form of the nitrogen adsorption-desorption isotherms and the hysteresis cycle are related to the porous structure of the solid. According to the original classification of Brunauer *et al.* (Brunauer, S. et al., Journal of American Chemical Society, 60 (1938) 309-319), there are five types of isotherms referred to as isotherms I to V. Likewise, four types of hysteresis loops, H1 to H4, are known (Sing, K.S.W. et al., Pure and Applied Chemistry, 57 (1985) 603-619). Preferably, the carbon black has a type II nitrogen adsorption-desorption isotherm typical of meso- and macroporous materials. In a preferred embodiment, the carbon black or magnetized carbon black has a meso- or macroporous structure. Likewise, the carbon black preferably has a type H3 hysteresis cycle typical of materials in the form of sheets, such as graphitic materials.

The surface of the carbon black is slightly basic in nature. The term "basicity" in reference to the surface of a solid refers to the presence therein of functional groups or active centers which behave like bases, i.e., which reduce the concentration of protons in an aqueous solution. The measurement of the point of zero charge ($pH_{PZC}$) allows knowing the acidic or basic nature of the solids. The term "point of zero charge" refers to the pH value at which the total net charge of the surface of the solid is neutral. Due to the materials having an intrinsic surface charge, a film consisting of ions with sign opposite the charge of the particle is created upon suspending said materials in an aqueous solution. Therefore, when positively or negatively charged materials are introduced in an aqueous solution, they are mainly surrounded by $H^+$ or $OH^-$, respectively, thereby modifying the pH of the medium. Preferably, the carbon black has a point of zero charge value between 7.5 and 12, even more preferably between 8 and 10, even more preferably between 8 and 9, most preferably 8.7. The point of zero charge ($pH_{PZC}$) can be determined experimentally by means of the method of deriving the pH as described in the examples.

The carbon black used in the process of the invention can also be a magnetized carbon black. "Magnetized carbon black" refers to a carbon black, as defined above, on the surface of which there are incorporated iron oxides which impart magnetic properties thereto.

The carbon black magnetization process involves the prior oxidation of the carbon black with an acid selected

from the group consisting of $HNO_3$, $H_2SO_4$, HCl, and mixtures thereof, preferably $HNO_3$. To carry out this process, the carbon black is submerged in an aqueous solution of the selected acid. Said solution has a percentage of the acid by weight of between 1% and 99%, more preferably between 10% and 90%, even more preferably between 20% and 80%, most preferably 35%. The concentration of the carbon black in said solution is comprised between 0.1 g $L^{-1}$ and 100 g $L^{-1}$, more preferably between 10 g $L^{-1}$ and 50 g $L^{-1}$, even more preferably between 20 g $L^{-1}$ and 30 g $L^{-1}$, most preferably 25 g $L^{-1}$. The mixture is heated to a temperature in the range of 20°C to 100°C, more preferably 40°C to 90°C, even more preferably 60°C to 90°C, most preferably 80°C. Said mixture is left to stir by mechanical or magnetic stirring at the selected temperature for a period comprised between 12 hours and 48 hours, more preferably between 15 hours and 40 hours, even more preferably between 20 hours and 35 hours, most preferably 24 hours. After the selected time has elapsed, the mixture is filtered, preferably with a 0.22 μm nylon filter, and the resulting solid is washed with deionized water until obtaining pH 7 in the washing water. The solid is then dried well either at room temperature or in an oven at a temperature no greater than 100°C. The oxidation allows generating on the surface of the carbon black surface oxygenated groups on which iron can be anchored.

Once the carbon black is oxidized, iron is incorporated on its surface by means of techniques known by one skilled in the art, preferably ion adsorption or incipient wetness impregnation, more preferably ion adsorption. To that end, a solution of an iron salt, which is selected from the group of iron nitrate, iron chloride, iron sulfate, and mixtures thereof, preferably iron nitrate (III), is prepared. The iron concentration in the solution is in the range of 0.1 g $L^{-1}$ to 50 g $L^{-1}$, preferably 1 g $L^{-1}$ to 30 g $L^{-1}$, more preferably 1 g $L^{-1}$ to 15 g $L^{-1}$, most preferably 6.5 g $L^{-1}$. Said solution is acidified with $HNO_3$, HCl, or $H_2SO_4$, preferably $HNO_3$, at a pH range of between 1 and 4, preferably between 1.5 and 3.5, more preferably between 2 and 3.5, most preferably 3. The oxidized carbon black is introduced in the preceding solution with an oxidized carbon black concentration comprised between 0.1 g $L^{-1}$ and 100 g $L^{-1}$, more preferably between 10 g $L^{-1}$ and 50 g $L^{-1}$, even more preferably between 20 g $L^{-1}$ and 30 g $L^{-1}$, most preferably 25 g $L^{-1}$. The mixture is adjusted to a temperature in the range of 10°C to 50°C, more preferably 10°C to 40°C, even more preferably 20°C to 30°C, most preferably 25°C. Said mixture is left to stir by mechanical or magnetic stirring at the selected temperature for a period comprised between 12 hours and 48 hours, more preferably between 15 hours and 40 hours, even more preferably between 20 hours and 35 hours, most preferably 24 hours. After the selected time has elapsed, the mixture is filtered, preferably with a 0.22 μm nylon filter, and the resulting solid is washed with deionized water until obtaining pH 7 in the washing water. The solid is then dried well either at room temperature or in an oven at a temperature no greater than 100°C.

Once the iron has been incorporated in the oxidized carbon black, the resulting solid is subjected to a heat treatment in order to secure the bonds between the iron and the carbon black. Said heat treatment can be carried out by means of any method known by one skilled in the art, although preferably, it is performed by means of heating in an air atmosphere. To that end, the solid is heated in an air atmosphere to a temperature comprised between 200°C and 500°C, preferably to a temperature comprised between 200°C and 400°C, even more preferably to a temperature comprised between 250°C and 350°C, most preferably to 300°C. In particular, heating is performed at a speed comprised between 0.5°C $min^{-1}$ and 20°C $min^{-1}$, more preferably between 1°C $min^{-1}$ and 15°C $min^{-1}$, even more preferably between 1°C $min^{-1}$ and 10°C $min^{-1}$, most preferably at a speed of 5°C $min^{-1}$. Once the selected temperature has been reached, the solid remains at said temperature for a time period comprised between 30 min and 24 hours, more preferably between 1 hours and 12 hours, even more preferably between 2 hours and 8 hours, most preferably 4 hours. Generally, the heating start temperature is room temperature (20°C - 25°C). Preferably, the heating is performed by means of a thermal cycle.

The solid resulting from the step of heat treatment in an air atmosphere is then subjected to a reducing heat treatment in order to reduce the iron and develop magnetic properties in the material. Said reducing heat treatment can be carried out by means of any method known by one skilled in the art, although preferably, it is performed by means of reduction in a hydrogen atmosphere. To that end, the solid is heated in a hydrogen atmosphere to a temperature comprised between 200°C and 500°C, preferably to a temperature comprised between 200°C and 400°C, even more preferably to a temperature comprised between 250°C and 400°C, most preferably to 350°C. In particular, heating is performed at a speed comprised between 0.5°C $min^{-1}$ and 20°C $min^{-1}$, more preferably between 1°C $min^{-1}$ and 15°C $min^{-1}$, even more preferably between 5°C $min^{-1}$ and 15°C $min^{-1}$, most preferably at a speed of 10°C $min^{-1}$. Once the selected temperature has been reached, the solid remains at said temperature for a time period comprised between 30 min and 24 hours, more preferably between 1 hours and 12 hours, even more preferably between 2 hours and 8 hours, most preferably 4 hours. Generally, the heating start temperature is room temperature (20°C - 25°C). Preferably, heating is performed by means of a thermal cycle.

The size, specific surface, and porosity of the magnetized carbon black are as defined above for the carbon black. The point of zero charge value of the magnetized carbon black is between 4.0 and 12, even more preferably between 4 and 6, even more preferably between 4 and 5, most preferably 4.3.

The terms "nanoplastic/carbon black particle aggregates" or "nanoplastic/carbon black aggregates" refer to a cluster of particles formed by nanoplastics and carbon black particles due to the interaction occurring between both.

The terms "nanoplastic/magnetized carbon black particle aggregates" or "nanoplastic/magnetized carbon black

aggregates" refer to a cluster of particles formed by nanoplastics and magnetized carbon black particles due to the interaction occurring between both.

When carbon black particles are added to the aqueous matrix in step b), nanoplastic/carbon black particle aggregates are obtained.

When magnetized carbon black particles are added to the aqueous matrix in step b), nanoplastic/magnetized carbon black particle aggregates are obtained.

The addition of carbon black or magnetized carbon black particles to the aqueous matrix can be performed continuously if the process is performed continuously or can be performed discontinuously if the process is performed discontinuously (or in batches).

In a particular embodiment, the process of the invention is performed discontinuously, i.e., in batches.

In another particular embodiment, the process of the invention is performed continuously.

In a preferred embodiment, the amount of carbon black or magnetized carbon black particles (by weight) added to the aqueous matrix in step b) is at least 2 times the amount of nanoplastics (by weight) present in the aqueous matrix provided in step a), more preferably at least 5, even more preferably at least 10. When the concentration of nanoplastics present in the aqueous matrix provided in step a) is unknown, the amount of carbon black or magnetized carbon black particles (by weight) added to the aqueous matrix is at least 0.1 times the amount of total organic carbon (by weight) present in the aqueous matrix provided in step a), more preferably at least 2, even more preferably at least 5, even more preferably at least 10. To determine the amount of total organic carbon (by weight) present in the aqueous matrix, including the concentration of nanoplastics present therein, an aliquot of the aqueous matrix can be taken and the concentration of total organic carbon is analyzed by means of a total organic carbon analyzer, using the conditions described in the examples.

In a preferred embodiment, the amount of carbon black or magnetized carbon black particles (by weight) added to the aqueous matrix in step b) is 2 to 300 times the amount of nanoplastics (by weight) present in the aqueous matrix provided in step a), more preferably 5 to 300, even more preferably 2 to 200, even more preferably 5 to 200, even more preferably 10 to 200, even more preferably 2 to 100, even more preferably 5 to 100, even more preferably 10 to 100, even more preferably even more preferably 2 to 75, even more preferably 5 to 75, even more preferably 10 to 75, even more preferably 2 to 50, even more preferably 5 to 50, most preferably 10 to 50. When the concentration of nanoplastics present in the aqueous matrix provided in step a) is unknown, the amount of carbon black or magnetized carbon black particles (by weight) added to the aqueous matrix is 0.1 to 300 times the amount of total organic carbon (by weight) present in the aqueous matrix provided in step a), more preferably 2 to 300, even more preferably 5 to 300, even more preferably 2 to 200, even more preferably 5 to 200, even more preferably 10 to 200, even more preferably 2 to 100, even more preferably 5 to 100, even more preferably 10 to 100, even more preferably even more preferably 2 to 75, even more preferably 5 to 75, even more preferably 10 to 75, even more preferably 2 to 50, even more preferably 5 to 50, most preferably 10 to 50. To determine the amount of total organic carbon (by weight) present in the aqueous matrix, including the concentration of nanoplastics present therein, an aliquot of the aqueous matrix can be taken and the concentration of total organic carbon is analyzed by means of a total organic carbon analyzer, using the conditions described in the examples.

In a preferred embodiment, the mixture obtained in step b) is subjected to stirring before performing step c). Stirring favors the interaction of nanoplastics and carbon black or magnetized carbon black particles to form nanoplastic/carbon black aggregates and nanoplastic/magnetized carbon black aggregates. Stirring can be performed by means of any conventional method known by one skilled in the art such as, for example, mechanical, magnetic, or electrostatic stirring, and more preferably mechanical stirring.

The process of the present invention is particularly advantageous with respect to other methods of the state of the art due to the significant reduction of the time needed to achieve separation. As shown in the examples, the complete separation of nanoplastics from water requires times of less than 45 min. To that end, in a particular embodiment, the mixture obtained in step b) is kept in contact, preferably with stirring, for a time from 30 minutes to 4 hours, more preferably from 45 minutes to 3 hours, most preferably about 1 hour.

Once the nanoplastic/carbon black aggregates or the nanoplastic/magnetized carbon black aggregates have been formed, they are separated from the aqueous matrix in step c).

In a particular embodiment, the nanoplastic/carbon black aggregates are separated from the aqueous matrix in step c) by means of a physical separation process such as, for example, sedimentation or centrifugation.

In a more particular embodiment, the nanoplastic/carbon black aggregates are separated from the aqueous matrix in step c) by means of sedimentation.

In another more particular embodiment, the nanoplastic/carbon black aggregates are separated from the aqueous matrix in step c) by means of centrifugation.

In another particular embodiment, the nanoplastic/magnetized carbon black aggregates are separated from the aqueous matrix in step c) by means of applying a magnetic field.

Said magnetic field can be generated with a magnet or electromagnet, preferably by means of a magnet.

In another particular embodiment, a magnetic iron material is added to the aqueous matrix comprising the nanoplastic/carbon black aggregates formed in step b). Due to the interaction occurring between magnetic iron material particles and carbon black, as well as between magnetic iron material particles and nanoplastic/carbon black aggregates, all the solids present in the aqueous matrix are separated in step c) by means of applying a magnetic field.

The term "magnetic iron material" refers to any solid substance comprising at least one iron species and having magnetic properties, i.e., it is attracted by a magnet. In a particular embodiment, the magnetic iron material is inorganic. Preferably, the magnetic iron material has a magnetic saturation of between 5 and 100 emu $g^{-1}$ (between $5 \cdot 10^3$ and $10^5$ A $m^{-1}$), more preferably between 30 and 90 emu $g^{-1}$ (between $30 \cdot 10^3$ and $90 \cdot 10^3$ A $m^{-1}$), even more preferably between 65 and 90 emu $g^{-1}$ (between $65 \cdot 10^3$ and $90 \cdot 10^3$ A $m^{-1}$), most preferably between 70 and 90 emu $g^{-1}$ (between $70 \cdot 10^3$ and $90 \cdot 10^3$ A $m^{-1}$). The magnetic properties of the magnetic iron material can be determined using a magnetometer with a SQUID (superconducting quantum interference device) sensor. The magnetization (M) of the magnetic iron material is measured depending on the external magnetic field applied (H) in the range of -10000 to 10000 Oe (which is equivalent to -797700 a 25 797700 A $m^{-1}$) at room temperature. The magnetic saturation value of the material is that value of M reached when any subsequent increase in H does not cause an increase in the magnetization of the material. Preferably, the iron material has an iron content of at least 10% by weight with respect to the total weight of the material, preferably at least 20% by weight, more preferably at least 25% by weight, even more preferably at least 30% by weight, even more preferably at least 35% by weight, even more preferably at least 40% by weight, even more preferably at least 45% by weight, even more preferably at least 50% by weight, even more preferably at least 55% by weight, even more preferably at least 60% by weight, even more preferably at least 65% by weight. The percentage of iron can be determined using a total reflection x-ray fluorescence (TXRF) spectrometer using the method described in the examples.

Preferably, the magnetic iron material comprises an iron species selected from the group consisting of Fe(II), Fe(III), metallic Fe, and a mixture thereof. One example would be magnetic iron minerals, such as magnetite (formed by ferrous-diferric oxide $FeO \cdot Fe_2O_3$, sometimes formulated as $Fe_3O_4$), maghemite ($\gamma$-$Fe_2O_3$), ilmenite ($FeTiO_3$) and pyrrhotite ($Fe_{0.8-1}S$), among others. In a preferred embodiment, the magnetic iron material is magnetite.

The use of magnetic iron minerals, particularly magnetite, is advantageous from the economic and environmental viewpoint because they are materials that are abundant, environmentally-friendly, and readily separated from the aqueous matrices.

The magnetic iron material is in the form of particles. The term refers to the magnetic iron mineral being in the form of powder or granules the mean diameter of which is comprised between 0.1 $\mu$m and 500 $\mu$m, preferably between 0.1 $\mu$m and 250 $\mu$m, preferably between 0.1 $\mu$m and 100 $\mu$m, preferably between 0.1 $\mu$m and 50 $\mu$m, more preferably between 0.1 $\mu$m and 10 $\mu$m, even more preferably between 0.1 $\mu$m and 5 $\mu$m, even more preferably between 0.1 $\mu$m and 1 $\mu$m, even more preferably between 0.1 $\mu$m and 0,5 $\mu$m, most preferably between 0.1 $\mu$m and 0.3 $\mu$m. Preferably, the particle size distribution must be sufficiently narrow in the established size range. The determination of particle size and its distribution can be performed by means of scanning electron microscopy, for example, using the conditions described in the examples. For the determination of the particle size distribution, it is advisable to use the statistical values D10, D50, and D90, which intercept 10%, 50%, and 90% by volume of the accumulated particles. In the preferred range, D10 (which indicates that 10% by volume of the particles in the sample have a diameter smaller than this value) is less than or equal to 0.3 $\mu$m, D50 (which indicates that 50% by volume of the particles in the sample have a diameter smaller than this value and represents the mean grain size) is less than or equal to 0.50 $\mu$m, and D90 (which indicates that 90% by volume of the particles in the sample have a diameter smaller than this value) is less than or equal to 0.8 $\mu$m. In the more preferred range, D10 (which indicates that 10% by volume of the particles in the sample have a diameter smaller than this value) is less than or equal to 0.15 $\mu$m, D50 (which indicates that 50% by volume of the particles in the sample have a diameter smaller than this 5 value and represents the mean grain size) is less than or equal to 0.20 $\mu$m, and D90 (which indicates that 90% by volume of the particles in the sample have a diameter smaller than this value) is less than or equal to 0.35 $\mu$m. Magnetic iron material particles can be obtained by means of grinding the material and later sieving in the size ranges described above. The size of the magnetic iron material particles refers to the mean diameter of said particles, which is defined as mean length (summation of lengths of the analyzed particles among the number of analyzed particles), with length being the largest dimension of each magnetic iron material particle.

The term "nanoplastic/carbon black/magnetic iron material aggregates" refers to a cluster of particles formed by nanoplastic/carbon black/magnetic iron material particle aggregates due to the interaction occurring between carbon black particles and the magnetic iron material.

The term "carbon black/magnetic iron material aggregates" refers to a cluster of particles formed by free carbon black particles with magnetic iron material particles due to the interaction occurring between carbon black particles and the magnetic iron material.

The addition of magnetic iron material particles to the aqueous matrix can be performed discontinuously if the process is performed discontinuously (or in batches) or can be performed continuously if the process is performed continuously.

In a particular embodiment, the process of the invention is performed discontinuously, i.e., in batches.

In another particular embodiment, the process of the invention is performed continuously.

In a preferred embodiment, the amount of magnetic iron material particles (in a final concentration measured in the aqueous matrix itself) in step c) is in the range of 1 mg $L^{-1}$ to 4000 g $L^{-1}$, more preferably 10 mg $L^{-1}$ to 1000 g $L^{-1}$, even more preferably 10 mg $L^{-1}$ to 100 g $L^{-1}$, even more preferably 10 mg $L^{-1}$ to 10 g $L^{-1}$, most preferably 100 mg $L^{-1}$ to 1 g $L^{-1}$.

In a preferred embodiment, the amount of magnetic iron material particles (by weight) added to the aqueous matrix in step c) is 0.1 to 200 the amount of carbon black particles (by weight) added to the aqueous matrix provided in step b), more preferably 0.5 to 100, even more preferably 1 to 75, most preferably 2 to 50. The amount of carbon black particles previously added to the aqueous matrix in step b) is used to determine the amount of magnetic material to be added.

In a preferred embodiment, the mixture obtained in step c) comprising magnetic material particles is subjected to stirring before performing magnetic separation. Stirring favors the interaction of nanoplastic/carbon black aggregates and free carbon black particles with magnetic iron material particles to form nanoplastic/carbon black/magnetic iron material aggregates and carbon black/magnetic iron material aggregates. Stirring can be performed by means of any conventional method known by one skilled in the art such as, for example, mechanical, magnetic, or electrostatic stirring, and more preferably mechanical stirring.

The process of the present invention is particularly advantageous with respect to other methods of the state of the art due to the significant reduction of the time needed to achieve separation. Likewise, the process shows a higher reproducibility in the separation yield obtained. As shown in the examples, separation is practically immediate, requiring a contact time between nanoplastic/carbon black/magnetic iron material particle aggregates of less than 1 min. To that end, in a particular embodiment, the mixture obtained in step c), when it comprises magnetic material particles, is kept in contact, preferably with stirring, for a time from 15 seconds to 2 min, more preferably 15 seconds to 1 minute, most preferably about 30 seconds.

Once the nanoplastic/carbon black/magnetic iron material aggregates and carbon black/magnetic iron material aggregates have been formed, they are separated from the aqueous matrix in step c) by means of applying a magnetic field.

The described process allows separating all magnetic solids from the aqueous matrix. Magnetic solids comprise nanoplastic/carbon black magnetite aggregates and carbon black/magnetite aggregates and magnetic material particles that have not formed aggregates and are free of nanoplastic/carbon black aggregates, as well as free carbon black particles.

Said magnetic field can be generated with a magnet or electromagnet, preferably by means of a magnet.

An additional advantage of the process of the present invention is the simplicity of the equipment required and the viability of scaling same for treating large volumes of water.

Once nanoplastic/carbon black aggregates or nanoplastic/magnetized carbon black aggregates have been separated from the aqueous matrix, carbon black particles (regardless of whether or not they are magnetized) can be recovered from said aggregates and reused in the process according to the invention. To that end, in a preferred embodiment, the carbon black or magnetized carbon black particles forming aggregates with nanoplastics separated in step c) are recovered to be reused. In a more preferred embodiment, the carbon black or magnetized carbon black particles are recovered by means of treating nanoplastic/carbon black aggregates or nanoplastic/magnetized carbon black aggregates with an organic solvent. To that end, nanoplastic/carbon black aggregates, nanoplastic/magnetized carbon black aggregates, nanoplastic/carbon black/magnetic material aggregates, and/or carbon black/ magnetic material aggregates, are introduced in an organic solvent which is selected from the group consisting of acetone, acetonitrile, ethanol, methanol, isopropanol, and mixtures thereof, preferably acetone. Nanoplastic/carbon black aggregates, nanoplastic/magnetized carbon black aggregates, nanoplastic/carbon black/magnetic material aggregates, and/or carbon black/magnetic material aggregates are introduced in the selected solvent with a solid concentration of less than or equal to 100 g $L^{-1}$, preferably less than or equal to 50 g $L^{-1}$, more preferably less than or equal to 30 g $L^{-1}$, even more preferably less than or equal to 25 g $L^{-1}$, more preferably comprised between 0.1 g $L^{-1}$ and 100 g $L^{-1}$, more preferably between 10 g $L^{-1}$ and 50 g $L^{-1}$, even more preferably between 20 g $L^{-1}$ and 30 g $L^{-1}$, most preferably 25 g $L^{-1}$. Said suspension is left to stir, by mechanical or magnetic stirring, for a time period of at least 30 seconds, preferably at least 1 minute, more preferably at least 2 minutes, even more preferably at least 5 minutes, more preferably for a time period comprised between 30 seconds and 1 hour, more preferably between 1 minute and 30 minutes, even more preferably between 2 minutes and 15 minutes, most preferably 5 minutes. After the selected time has elapsed, the mixture is filtered, preferably with a 0.22 $\mu$m nylon filter, and the solid is dried well either at room temperature or in an oven at a temperature no greater than 100°C.

Moreover, given the high thermal stability of carbon blacks, said particles can be recovered in another preferred embodiment by means of a heat treatment. Said heat treatment can be carried out by means of any method known by one skilled in the art, although preferably, it is performed by means of combustion in an air atmosphere. To that end, nanoplastic/carbon black aggregates, nanoplastic/magnetized carbon black aggregates, nanoplastic/carbon black/magnetic material aggregates, and/or carbon black/magnetic material aggregates are heated to a temperature comprised between 200°C and 600°C, preferably to a temperature comprised between 300°C and 500°C, even more preferably to a temperature comprised between 350°C and 450°C, most preferably to 400°C. In particular, heating is performed at a speed comprised between 0.5°C $min^{-1}$ and 20°C $min^{-1}$, more preferably between 1°C $min^{-1}$ and 15°C $min^{-1}$, even more preferably between 1°C $min^{-1}$ and 10°C $min^{-1}$, most preferably at a speed of 5°C $min^{-1}$. Once the selected temperature has been reached, the solid remains at said temperature for a time period comprised between 30 min and 24 hours, more preferably between 1 hours and 12 hours, even more preferably between 2 hours and 8 hours, most preferably 4 hours. Generally, the heating start temperature is room temperature (20°C - 25°C). Preferably, heating is performed by means of a thermal cycle.

Illustrative examples disclosing the features and advantages of the invention are described below; however, they must not be interpreted as being limiting of the object of the invention as defined in the claims.

## Examples

### *Materials and methods*

#### *Determination of particle size*

In the present invention, the microplastics were added to the aqueous matrices to subsequently carry out their separation by means of the process described in the specification. Determination the particle size of nanoplastics and carbon blacks (as well as the other carbonaceous materials used) was performed by means of transmission electron microscopy.

Measuring the particle size of all the solids mentioned above began with the aqueous suspensions thereof at a concentration of 100 mg $L^{-1}$. To ensure a homogenous distribution of the particles in water, the suspension was introduced in an ultrasound bath for 10 minutes. Then, an aliquot of the aqueous colloidal suspension was taken, deposited on a copper mesh coated with an organic polymer, and once the solvent (in this case, water) has evaporated, analysis was performed on the sample by means of transmission electron microscopy. In this case, transmission electron microscope JEOL JEM 2100 using a CCD ORIUS SC1000 camera (Model 832) and having a resolution between points of 0.25 nm was used. The diameter of the particles, in the case where they are spherical, was measured. In amorphous particles, the length and width of the particles were measured and the size of the largest dimension (length) was assigned thereto. To determine the mean particle size and particle size distribution, the size of at least 200 particles was measured in the transmission electron microscopy images obtained (using the software imaged). The particle size is recorded as the volume equivalent diameter of a sphere. Specifically, statistical values D10, D50, and D90, which intercept 10%, 50%, and 90% by volume of the accumulated particles, were determined.

The magnetite particle size measurement is analyzed by means of scanning electron microscopy. In this case, JEOL JSM 6335F microscope was used. A 20 kV voltage was used and work was performed with a maximum amplification of 10,000x. Samples were dispersed on a sample holder coated with carbon and an adhesive to keep the solid particles in place. To determine the mean particle size and particle size distribution, the diameter of at least 200 particles was measured in the scanning electron microscopy images obtained (using the software imaged). The particle size is recorded as the volume equivalent diameter of a sphere. Specifically, the statistical values D10, D50, and D90, which intercept 10%, 50%, and 90% by volume of the accumulated particles, were determined.

#### *Determination of the concentration of nanoplastics in the aqueous matrix*

Nanoplastics form highly stable and homogenous suspensions in the aqueous matrix, where sedimentation is not observed, although they remain for days. By utilizing said property, the concentration of nanoplastics was determined by measuring the total organic carbon of the sample by means of a Shimadzu TOC-L analyzer. This equipment measures the concentration of total carbon, of inorganic carbon, and of total organic carbon as a difference between the former two.

Total organic carbon is determined by oxidizing the sample to be analyzed with air at 680°C in a quartz reactor in the presence of a $Pt/Al_2O_3$ catalyst. The $CO_2$ formed in the process is quantified by means of a non-dispersive infrared analyzer. Moreover, in order to determine the concentration of inorganic carbon, a fresh sample aliquot is injected into a deposit in which, by means of acidification with 25% wt. phosphoric acid, all the dissolved carbonates and bicarbonates are released in the form of $CO_2$, the concentration of which is again quantified in the infrared detector. The final concentration of total organic carbon is obtained as a difference. The volume of sample to be analyzed was 15 mL.

#### *Determination of specific surface and porous structure*

The specific surface and porous structure of carbon blacks and activated carbons were determined by means

of performing nitrogen adsorption-desorption isotherms. The experimental measurements of nitrogen adsorption-desorption were carried out at - 196°C in Micromeritics TriStar II equipment. In general, the samples were degassed for 24 hours at 120°C with a residual pressure of $10^{-4}$ bar in order to remove any gas adsorbed on the surface, by means of a Micromeritics VacPrep 061 degasser.

About 120 mg of each material were weighed and, after being degassed, introduced in the Micromeritics TriStar II equipment for measuring the isotherms. During this process, the amount of nitrogen adsorbed on the different solids at -196°C as a function of partial nitrogen pressure is measured. The representation thereby obtained gives rise to nitrogen adsorption-desorption isotherms based on which sample porosity, as well as specific surface, can be determined.

To determine the specific surface based on this technique, the IUPAC recommends the methodology developed by Brunauer *et al.* (Brunauer, S. et al., Journal of American Chemical Society, 60 (1938) 309-319), who developed the equation known today as BET (BET method). The BET equation links the volume of gas adsorbed at a specific relative pressure to the volume adsorbed in a monolayer of adsorbate on the solid. The value of the specific surface of carbon blacks and activated carbons was therefore calculated based on the data corresponding to relative pressures between 0.02 and 0.15.

***Determination of ash content and combustion temperature***

The ash content of both the carbon blacks and the activated carbons used was determined by means of thermogravimetric analysis, which also allowed knowing the thermal stability of the solids, and therefore their combustion temperature. Said analysis was performed in a SDT650 horizontal thermobalance with a balance that detects changes in weight with a resolution of 1 μg. It has a cylindrical micro-oven reaching temperatures of 1100°C, with a maximum precision of ± 0.25°C. The sample, usually 10 mg, is introduced in an alumina crucible and heated to 900°C from room temperature with a heating speed of 10°C $min^{-1}$. Analyses were carried out using an air flow rate of 250 mL $min^{-1}$. The residual mass obtained at the end of the experiment is the ash content thereof. Moreover, the representation of the curves obtained allows determining the combustion temperature of the different materials, since this is the temperature at which the mass of the material begins to decrease (once the moisture content has been removed at about 100°C).

***Determination of point of zero charge***

The point of zero charge ($pH_{PZC}$) of both the carbon blacks and the activated carbons used was determined experimentally by measuring the pH value of an aqueous solution with a known initial pH value in which the material to be analyzed was introduced. Specifically, 20 mg of the material to be analyzed (carbon black or activated carbon) were weighed and introduced in 20 mL scintillation vials with 10 mL of water, using deionized water the pH value of which was previously adjusted to: 4, 6, 8, 10, and 12. After 24 h under stirring at room temperature (25°C), the final pH value was measured. To determine $pH_{PZC}$, the pH value is represented after 24 h as a function of the initial pH value, where the intersection with the diagonal of the graph is the $pH_{PZC}$ value.

***Determination of the percentage of iron***

The iron content of magnetized carbon black as well as of magnetite was determined using a total reflection x-ray fluorescence (TXRF) spectrometer, specifically S2 Picofox (Bruker), with a molybdenum source. The sample preparation method consisted of digestion in an open beaker using a solution of hydrochloric acid, nitric acid, and hydrofluoric acid in a proportion by volume of 6:2:0.5, at 105°C for 1,5 hours. The concentration of magnetized carbon black in the beaker was 1000 mg $L^{-1}$ and a total volume of 10 mL was used. Once digested, the magnetized carbon black sample was added into the gallium internal standard solution for subsequent quantification. A 3 μL aliquot of the resulting solution was introduced in the spectrometer for analysis, which was carried out at 50 kV and 600 μA with an acquisition time of 500 s. The integration of the peak corresponding to iron in the spectrogram obtained allows determining the percentage of iron by weight contained in the magnetized carbon black.

***Determination of nanoplastic separation yield***

With the total organic carbon measurement, the nanoplastic separation yield (%) achieved for each material was calculated following Equation 1:

$$\text{Separation yield (\%)} = \frac{([\text{COT}]_0 - [\text{COT}]_{\text{final}})}{[\text{COT}]_0} \cdot 100 \qquad \text{Equation 1}$$

where $[COT]_0$ (mg $L^{-1}$) is the initial concentration of total organic carbon in the aqueous matrix subjected to the separation process and $[COT]_{final}$ (mg $L^{-1}$) is the final concentration of total organic carbon in the supernatant, i.e., in the aqueous matrix after having been subjected to the separation process.

***Determination of the adsorption capacity of the materials***

With the total organic carbon measurement, the adsorption capacity ($q_e$) of each material was calculated following Equation 2:

$$q_e = \frac{([NPs]_0 - [NPs]_{final}) \cdot V}{W} \qquad \text{Equation 2}$$

where $q_e$ is the adsorption capacity (mg $g^{-1}$), $[NPs]_0$ (mg $L^{-1}$) the initial concentration of nanoplastics in the aqueous suspension or aqueous matrix subjected to the separation process, $[NPs]_{final}$ (mg $L^{-1}$) is the final concentration of nanoplastics in the supernatant or aqueous matrix after having been subjected to the separation process, V is the volume of the nanoplastic suspension (L) or aqueous matrix subjected to the separation process, fixed at 0.04 L, and W is the weight of the material (in the examples, carbon black or activated carbon) used for the separation (g), fixed at 0.04 g.

***X-ray diffraction***

Powder x-ray diffraction (PXRD) was used to carry out the identification and characterization of the crystalline phases present in the magnetic iron material. The samples were analyzed in an X'Pert PRO theta/theta diffractometer by Panalytical with a Cu tube (K$\alpha$ radiation, 8.04 keV). The diffractometer has a secondary graphite monochromator and a Xe gas detector. A theta/2theta scan was performed with a 2$\theta$ range of 10 to 80°, an angular increment of 0.04°, and an accumulation time of 4s. For the identification of the crystalline phases present in the obtained diffractograms, the High Score Plus software and the ICDD (International Centre for Diffraction Data) PDF-4 Full File crystallographic database were used.

***Determination of magnetic saturation***

The magnetic properties of the magnetic iron material were measured using a Quantum Design MPMS XL-5 magnetometer with a SQUID (superconducting quantum interference devices) sensor. The magnetic moment (M) of the magnetic iron material was measured depending on the applied external magnetizing field (H) in the range of - 10000 to 10000 Oe (equivalent to -797700 to 797700 A $m^{-1}$ in the SI) at room temperature. The magnetic saturation value is that value of M that is reached when any subsequent increase 25 in H does not cause an increase in the magnetization of the material.

***Example 1. Separation of polystyrene nanoplastics from an aqueous matrix by means of using carbon blacks and activated carbons***

Experiments for separating polystyrene nanoplastics with a particle size of 140 nm from an aqueous matrix were performed. The nanoplastics, with a purity of ≥99%, were supplied by the company MicroParticles GMBH. The separation process used was carried out using two commercial carbon blacks (Carbon black Vulcan XC72 (≥99%) and Carbon black, acetylene, 100% compressed (≥99%), supplied by the business entities Cabot and Alfa Aesar, respectively) and three also commercial activated carbons (Norit GSX (≥95%), Chemviron (≥95%), and Merck (≥95%), supplied by the business entities Norit, Chemviron, and Merck, respectively). Table 1 shows the main properties of the solids in terms of particle size, specific surface, porous structure, point of zero charge, combustion temperature, and ash content. Likewise, Figure 1 shows the transmission electron microscopy images of each of the materials used in the separation experiments, as well as of the actual nanoplastics used. Figure 2 shows the particle size distribution of each of the materials used in the separation experiments. In the case of nanoplastics, the suspension had a monodisperse particle size of 140 nm. Figure 3 shows the Nz adsorption-desorption isotherms of each of the materials used in the separation experiments. Based on said isotherms, the specific surface and porous structure corresponding to each material were determined. Figure 4 shows the results of the thermogravimetric analyses, where the percentage of relative mass loss of each material (and also of the 140 nm polystyrene nanoplastics) is depicted as a function of temperature.

Table 1

| Material | Mean particle size ($\mu m$) | Specific surface ($m^2\ g^{-1}$) | Porous structure | $pH_{PZC}$ | Combustion temperature (°C) | Ash content (% by weight) |
|---|---|---|---|---|---|---|
| Carbon black Cabot | 26 x $10^{-3}$ | 198 | Type II isotherm (meso- and macroporosity) H3 hysteresis cycle (materials in the form of sheets) | 8.7 | 600 | 0.2 |
| Carbon black Alfa Aesar | 42 x $10^{-3}$ | 70 | Type II isotherm (meso- and macroporosity) H3 hysteresis cycle (materials in the form of sheets) | 8.0 | 680 | 0.1 |
| Activated carbon Norit | 0.42 | 753 | Type Ib isotherm (large micropores) and Type II isotherm (meso- and macroporosity) H3-H4 hysteresis cycle (materials in the form of sheets - highly microporous materials) | 7.6 | 460 | 6.3 |
| Activated carbon Chemviron | 5.85 | 880 | Type Ib isotherm (large micropores) H4 hysteresis cycle (highly microporous materials) | 7.5 | 490 | 4.8 |
| Activated carbon Merck | 5.93 | 948 | Type Ib isotherm (large micropores) H4 hysteresis cycle (highly microporous materials) | 7.1 | 520 | 5.3 |

The separation experiments were carried out in 50 mL Falcon tubes in which the aqueous matrix, polystyrene nanoplastics, and particles of the selected material (carbon black or activated carbon) were introduced. Both the polystyrene nanoplastics and the particles of the material used for separation thereof (carbon black or activated carbon) remained in suspension in the aqueous matrix. The experiments were carried out at room temperature using deionized water the pH of which was not adjusted. All the experiments were performed in triplicate.

A 40 mL volume of aqueous matrix with a concentration of polystyrene nanoplastics of 40 mg $L^{-1}$ was used. There was added to said suspension 40 mg of the selected material (carbon black or activated carbon). Then, the Falcon vials containing the suspensions were placed under stirring in a Julabo SW22 orbital bath for 24 h at 25°C. They were then centrifuged in a Digicen 21 centrifuge at 7500 rpm for 10 minutes to then extract the supernatant with the help of a needle. From the extracted supernatant, 20 mL were placed in vials from which the total organic carbon was analyzed.

Table 2 shows the yields obtained in the separation of the 140 nm polystyrene nanoplastics from water with each of the tested materials.

Table 2

| Material | Separation yield (%) |
|---|---|
| Carbon black Cabot | ≥99.9 |
| Carbon black Alfa Aesar | ≥99.9 |
| Activated carbon Norit | 57.3 |
| Activated carbon Chemviron | 14.0 |
| Activated carbon Merck | 4.7 |

Figure 5 shows a photograph of the suspension of polystyrene nanoplastics in deionized water (5.A), a photograph of the suspension of polystyrene nanoplastics and carbon black Cabot particles in deionized water (5.B), and a photograph of the suspension of polystyrene nanoplastics and carbon black Cabot particles in deionized water after the centrifugation process (5.C).

As can be seen, the separation of polystyrene nanoplastics was extremely effective with carbon blacks, achieving mass recovery values above 99%, with completely clear water being obtained at the end of the experiment (Figure 5). However, activated carbons, materials which are commonly used as adsorbents in water treatment and having specific

surface values significantly greater than carbon blacks, were rather ineffective in separating nanoplastics from the aqueous matrix. Furthermore, said materials had a significant ash content of about 5% by mass. These metals may be leached into water, representing an additional source of pollution. It should be pointed out that carbon blacks had practically negligible ash content values.

***Example 2. Separation of polystyrene nanoplastics from an aqueous matrix by means of using carbon blacks. Calculation of maximum adsorption capacity***

Experiments for separating polystyrene nanoplastics with a particle size of 140 nm from an aqueous matrix were performed. The nanoplastics, with a purity of ≥99%, were supplied by the company MicroParticles GMBH. The separation process used was carried out using two commercial carbon blacks (Carbon black Vulcan XC72 (≥99%) and Carbon black, acetylene, 100% compressed (≥99%), supplied by the business entities Cabot and Alfa Aesar, respectively). Table 1 shows the main properties of the two carbon blacks in terms of particle size, specific surface, porous structure, point of zero charge, combustion temperature, and ash content. Likewise, Figure 1 shows the transmission electron microscopy images of the two carbon blacks, as well as of the actual nanoplastics used. Figure 2 shows the particle size distribution of the two carbon blacks. In the case of nanoplastics, the suspension had a monodisperse particle size of 140 nm. Figure 3 shows the Nz adsorption-desorption isotherms of the two carbon blacks. Based on said isotherms, the specific surface and porous structure corresponding to each material were determined. Figure 4 shows the results of the thermogravimetric analyses of the two carbon blacks, where the percentage of relative mass loss of each material (and also of the 140 nm polystyrene nanoplastics) is depicted as a function of temperature.

The separation experiments were carried out in 50 mL Falcon tubes in which the aqueous matrix, polystyrene nanoplastics, and particles of the selected carbon black were introduced. Both the polystyrene nanoplastics and the carbon black particles used for separation remained in suspension in the aqueous matrix. The experiments were carried out at room temperature using deionized water the pH of which was not adjusted. All the experiments were performed in triplicate.

A 40 mL volume of aqueous matrix with a concentration of polystyrene nanoplastics that varied in the range between 5 and 500 mg $L^{-1}$ (5, 10, 20, 40, 75, 100, 200, and 500 mg $L^{-1}$) was used. There was added to said suspension 40 mg of the selected carbon black. Then, the Falcon vials containing the suspensions were placed under stirring in a Julabo SW22 orbital bath for 1 h at 25°C. They were then centrifuged in a Digicen 21 centrifuge at 7500 rpm for 10 minutes to then extract the supernatant with the help of a needle. From the extracted supernatant, 20 mL were placed in vials from which the total organic carbon was analyzed.

Figure 6 shows the isotherms of the adsorption of the 140 nm polystyrene nanoplastics on the two carbon blacks used.

Table 3 shows the yields obtained in the separation of the 140 nm polystyrene nanoplastics from water with each of the two carbon blacks used and for all the initial concentrations of nanoplastic used.

Table 4 shows the maximum adsorption capacities of the two carbon blacks used.

Table 3

| Carbon black | Initial concentration of polystyrene nanoplastics (mg $L^{-1}$) | Separation yield (%) |
|---|---|---|
| Carbon black Cabot (1 g $L^{-1}$) | 5 | ≥99.9 |
| | 10 | ≥99.9 |
| | 20 | ≥99.9 |
| | 40 | ≥99.9 |
| | 75 | ≥99.9 |
| | 100 | ≥99.9 |
| | 200 | 99.2 |
| | 500 | 87.5 |

(continued)

| Carbon black | Initial concentration of polystyrene nanoplastics (mg $L^{-1}$) | Separation yield (%) |
|---|---|---|
| Carbon black Alfa Aesar (1 g $L^{-1}$) | 5 | ≥99.9 |
| | 10 | ≥99.9 |
| | 20 | ≥99.9 |
| | 40 | ≥99.9 |
| | 75 | ≥99.9 |
| | 100 | ≥99.9 |
| | 200 | 90.6 |

Table 4

| Carbon black | Maximum adsorption capacity ($mg_{Nanoplastic}\ g_{Carbon\ black}^{-1}$) |
|---|---|
| Carbon black Cabot | 426 |
| Carbon black Alfa Aesar | 179 |

As can be seen, the separation of polystyrene nanoplastics was extremely effective with carbon blacks, achieving mass recovery values above 99.9% when concentrations of nanoplastic of up to 100 mg $L^{-1}$ were used. As shown by the adsorption isotherms of both carbon blacks, there is a significant increase in adsorption at concentrations of nanoplastic of up to 100 mg $L^{-1}$, to then reach a complete saturation region (monolayer) in which the maximum adsorption capacity is obtained. Carbon black Cabot was particularly effective in removing nanoplastics, reaching a maximum adsorption capacity of 426 mg $g^{-1}$, an amount much higher than those reported in the literature for a large variety of adsorbents. In turn, carbon black Alfa Aesar presented a maximum adsorption capacity of 179 mg $g^{-1}$. The lower capacity of this carbon black can be linked to its larger particle size, and therefore smaller specific surface; as well as to the fact that the point of zero charge is lower than that of carbon black Cabot. Given the hydrophobicity of plastics, their interaction with basic materials is more favored.

After the nanoplastic separation process, the aqueous matrix remained completely clean, without any type of residue originating from either the nanoplastics or the carbon blacks.

***Example 3. Separation of polystyrene nanoplastics of different particle sizes from an aqueous matrix by means of using carbon black Cabot***

Experiments for separating polystyrene nanoplastics with a particle size of 140 nm and 900 nm from an aqueous matrix were performed. The nanoplastics, with a purity of ≥99%, were supplied by the company MicroParticles GMBH. The separation process used was carried out using the commercial carbon black: Carbon black Vulcan XC72 (≥99%), supplied by the business entity Cabot. Table 1 shows the main properties of the carbon black in terms of particle size, specific surface, porous structure, point of zero charge, combustion temperature, and ash content. Likewise, Figure 1 shows the transmission electron microscopy images of the carbon black used in the separation experiments, as well as of the actual nanoplastics used. Figure 2 shows the particle size distribution of the carbon black used in the separation experiments. In the case of nanoplastics, the suspension had a monodisperse particle size of 140 nm and 900 nm, for the 140 nm and 900 nm nanoplastics, respectively. Figure 3 shows the $N_2$ adsorption-desorption isotherms of the carbon black used in the separation experiments. Based on said isotherms, the specific surface and porous structure of said material were determined. Figure 4 shows the results of the thermogravimetric analyses of the carbon black, where the percentage of relative mass loss of each material (and also of the 140 nm polystyrene nanoplastics) is depicted as a function of temperature.

The separation experiments were carried out in 50 mL Falcon tubes in which the aqueous matrix, polystyrene nanoplastics, and carbon black Cabot particles were introduced. Both the polystyrene nanoplastics and the carbon black particles remained in suspension in the aqueous matrix. The experiments were carried out at room temperature using deionized water the pH of which was not adjusted. All the experiments were performed in triplicate.

One experiment was performed for every tested nanoplastic size. A 40 mL volume of aqueous matrix with a concentration of polystyrene nanoplastics of 40 mg $L^{-1}$ was used. There was added to said suspension 40 mg of carbon

black Cabot. Then, the Falcon vials containing the suspensions were placed under stirring in a Julabo SW22 orbital bath for 1 h at 25°C. Solids in the vials which are capable of settling were then left to settle for 24 h, to then extract the supernatant with the help of a needle. From the extracted supernatant, 20 mL were placed in vials from which the total organic carbon was analyzed. The settling process was used instead of the centrifugation process because the 900 nm polystyrene nanoplastics were also separated from the aqueous matrix by means of centrifugation in the absence of carbon black Cabot. However, said nanoplastics remained in suspension if the suspension was left to stand for 24 h.

Table 5 shows the yields obtained in the separation of the 140 nm and 900 nm polystyrene nanoplastics from water with carbon black Cabot.

Table 5

| Carbon black | Separation yield (%) | |
|---|---|---|
| | 140 nm polystyrene nanoplastic | 900 nm polystyrene nanoplastic |
| Carbon black Cabot | ≥99.9 | ≥99.9 |

As can be seen, the separation of polystyrene nanoplastics was extremely effective with carbon black Cabot regardless the size of nanoplastic used. Nanoplastics are defined as plastic particles with a size of less than 1000 nm (Gaylarde, C.C. et al., Environmental Pollution, 272 (2021) 115950; Huang, D. et al., Journal of Hazardous Materials 407 (2021) 124399; Song, Z. et al., Science of the Total Environment, 669 (2019) 120-128; Wu, J. et al., Chemosphere, 263 (2021) 127967), whereby it can be confirmed that the process developed is highly effective for separating these particles, with said effectiveness being demonstrated in the wide range of 140 nm to 900 nm.

After the nanoplastic separation process, the aqueous matrix remained completely clean, without any type of residue originating from either the nanoplastics or the carbon blacks.

***Example 4. Kinetic study of the separation of polystyrene nanoplastics from an aqueous matrix by means of using carbon black Cabot***

Experiments for separating 140 nm polystyrene nanoplastics from an aqueous matrix were performed. The nanoplastics, with a purity of ≥99%, were supplied by the company MicroParticles GMBH. The separation process used was carried out using the commercial carbon black: Carbon black Vulcan XC72 (≥99%), supplied by the business entity Cabot. Table 1 shows the main properties of the carbon black in terms of particle size, specific surface, porous structure, point of zero charge, combustion temperature, and ash content. Likewise, Figure 1 shows the transmission electron microscopy images of the carbon black used in the separation experiments, as well as of the actual nanoplastics used. Figure 2 shows the particle size distribution of the carbon black used in the separation experiments. In the case of nanoplastics, the suspension had a monodisperse particle size of 140 nm. Figure 3 shows the Nz adsorption-desorption isotherms of the carbon black used in the separation experiments. Based on said isotherms, the specific surface and porous structure of said material were determined. Figure 4 shows the results of the thermogravimetric analyses of the carbon black, where the percentage of relative mass loss of each material (and also of the 140 nm polystyrene nanoplastics) is depicted as a function of temperature.

The separation experiments were carried out in 50 mL Falcon tubes in which the aqueous matrix, polystyrene nanoplastics, and carbon black Cabot particles were introduced. Both the polystyrene nanoplastics and the carbon black particles remained in suspension in the aqueous matrix. The experiments were carried out at room temperature using deionized water the pH of which was not adjusted. All the experiments were performed in triplicate.

A 40 mL volume of aqueous matrix with a concentration of polystyrene nanoplastics of 100 mg $L^{-1}$ was used. There was added to said suspension 40 mg of carbon black Cabot. Then, the Falcon vials containing the suspensions were placed under stirring in a Julabo SW22 orbital bath at 25°C. One Falcon vial was prepared for each of the contact times that were analyzed: 10, 30, 45, 60, and 75 minutes. They were then centrifuged in a Digicen 21 centrifuge at 7500 rpm for 10 minutes to then extract the supernatant with the help of a needle. From the extracted supernatant, 20 mL were placed in vials from which the total organic carbon was analyzed.

Figure 7 shows the evolution of the polystyrene nanoplastic separation yield throughout the adsorption test.

As can be seen, complete separation of polystyrene nanoplastics was achieved in less than 45 minutes, a time very much below the times reported in the literature for nanoplastic adsorption using activated carbons. With said adsorbents, commonly used in water treatment, the separation of nanoplastics from water required long balancing times of at least 4 h, and in most cases 24 h (Ramirez-Arenas, L. et al., Science of the Total Environment, 791 (2021) 148175; Abdoul, A.S.I. et al. Science of the Total Environment, 784 (2021) 147115; Zhu, N. et al., Journal of Hazardous Materials 433 (2022) 128756; Zhou, G. et al., Science of the Total Environment 820 (2022) 153190). In fact, 45 minutes is a representative contact time often used in adsorption-based tertiary treatment processes in the WWPP (Mailler, R. et al.,

Journal of Environmental Chemical Engineering, 4 (2016) 1102-1109).

After the nanoplastic separation process, the aqueous matrix remained completely clean, without any type of residue originating from either the nanoplastics or the carbon blacks.

***Example 5. Magnetic separation of polystyrene nanoplastics from an aqueous matrix by means of using magnetized carbon black Cabot***

Experiments for separating 140 nm polystyrene nanoplastics from an aqueous matrix were performed. The nanoplastics, with a purity of ≥99%, were supplied by the company MicroParticles GMBH. The separation process used was carried out using the commercial carbon black, Carbon black Vulcan XC72 (≥99%), which was supplied by the business entity Cabot and previously magnetized. The magnetization process was carried out by subjecting the commercial carbon black to four treatment stages: oxidation of the surface of the carbon black by means of an acid treatment, incorporation of iron on the surface of the oxidized solid, combustion heat treatment in an air atmosphere, and reducing heat treatment in a hydrogen atmosphere.

To perform the oxidation of the carbon black, 1 g of the solid was weighed in a 100 mL glass bottle. There were added along with this solid 20 mL of deionized water and 20 mL of 68% nitric acid. The mixture was left under stirring on an IKA RTC basic magneto-heater plate for 24 h at 400 rpm and 80°C. After 24 h, the mixture was filtered with a 0.22 μm nylon filter and the solid was washed with deionized water until obtaining pH 7 in the washing water. The solid was then dried in an oven for 12 h at 60°C. Then, iron was incorporated on the surface thereof by means of ion adsorption. To that end, an iron nitrate (III) nonahydrate solution (11.3 g of salt in 250 mL of deionized water) acidified to pH 2-3 with nitric acid was prepared. 40 mL of the iron nitrate solution were pipetted and introduced in a 100 mL glass bottle together with the oxidized carbon black. Then, it was left under stirring at 400 rpm and room temperature (25°C) for 24 h on an IKA RTC basic magneto-heater plate. After 24 h, the mixture was filtered with a 0.22 μm nylon filter and the solid was washed with deionized water until obtaining pH 7 in the washing water. The solid was then dried in an oven for 12 h at 60°C. After ensuring the absence of moisture in the carbon black, it was calcined in a muffle furnace (Eurotherm 10-PR/200) at 300°C, with a heating ramp of 5°C/min, for 4 h. Finally, after being calcined, the resulting solid was reduced. 0.5 g of the carbon black were introduced in a reduction oven for 4 h at 350°C with a ramp of 10°C $min^{-1}$ and a hydrogen flow of 50 mL $min^{-1}$ so that magnetic properties could develop in the material.

Figure 8 shows the transmission electron microscopy image of the magnetized carbon black. Figure 1 shows the transmission electron microscopy image of the nanoplastics used. The main properties of the commercial carbon black remain virtually intact after the magnetization process, with the exception of the point of zero charge which decreased to value of 4.3 due to the oxidation of the solid. The mean particle size therefore increased slightly to 29 nm, whereas the specific surface decreased slightly to 160 $m^2$ $g^{-1}$. The material likewise showed a type II $N_2$ isotherm adsorption-desorption, typical of meso- and macroporous materials, and a type H3 hysteresis cycle, typical of materials in the form of sheets such as graphitic materials. The incorporation of iron indeed decreased the combustion temperature of the material to 450°C given that the metal catalyzes the oxidation of the carbon black. In turn, the ash content was at 5% by weight, which is consistent with the iron content of the material measured by means of TXRF (4.5%).

The separation experiments were carried out in 50 mL Falcon tubes in which the aqueous matrix, polystyrene nanoplastics, and magnetized carbon black Cabot particles were introduced. Both the polystyrene nanoplastics and the carbon black particles remained in suspension in the aqueous matrix. The experiments were carried out at room temperature using deionized water the pH of which was not adjusted. All the experiments were performed in triplicate.

A 40 mL volume of aqueous matrix with a concentration of polystyrene nanoplastics that varied in the range between 5 and 100 mg $L^{-1}$ (5, 10, 20, 40, 75, and 100 mg $L^{-1}$) was used. There was added to said suspension 40 mg of the magnetized carbon black. Then, the Falcon vials containing the suspensions were placed under stirring in a Julabo SW22 orbital bath for 2 h at 25°C. They were then centrifuged in a Digicen 21 centrifuge at 7500 rpm for 10 minutes to then extract the supernatant with the help of a needle. From the extracted supernatant, 20 mL were placed in vials from which the total organic carbon was analyzed.

Figure 9 shows the isotherm of the adsorption of 140 nm polystyrene nanoplastics on the magnetized carbon black.

Table 6 shows the yields obtained in the separation of the 140 nm polystyrene nanoplastics from water with each of the initial concentrations of nanoplastic used.

Table 6

| Carbon black | Initial concentration of polystyrene nanoplastics (mg $L^{-1}$) | Separation yield (%) |
|---|---|---|
| Magnetized carbon black Cabot | 5 | ≥99.9 |
| | 10 | ≥99.9 |
| | 20 | ≥99.9 |
| | 40 | ≥99.9 |
| | 75 | ≥99.9 |
| | 100 | 97.0 |

Figure 10 shows a photograph of the suspension of polystyrene nanoplastics in deionized water (10.A), a photograph of the suspension of polystyrene nanoplastics and magnetized carbon black Cabot particles in deionized water (10.B), and a photograph of the suspension of polystyrene nanoplastics and magnetic carbon black Cabot particles in deionized water after 2 h of contact under the influence of a magnet (10.C).

As can be seen, the separation of polystyrene nanoplastics was extremely effective with the magnetized carbon black, achieving mass recovery values above 99.9% when concentrations of nanoplastic of up to 75 mg $L^{-1}$ were used. As shown by the adsorption isotherms of both carbon blacks, there is a significant increase in adsorption at concentrations of nanoplastic of up to 100 mg $L^{-1}$, to then reach a complete saturation region (monolayer) in which the maximum adsorption capacity is obtained. In the case of magnetized carbon black Cabot, the maximum adsorption capacity was 118 mg $g^{-1}$. This value was significantly lower than that reached with fresh carbon black Cabot due to the incorporation of magnetite, and essentially to the material surface modification as a result of oxidation treatment, which conferred an acidic nature thereto. However, this material has the advantage of being readily separated from the aqueous matrix under the application of a magnet, which allows their virtually instantaneous removal, unlike centrifugation processes, and particularly sedimentation processes. Moreover, in terms of adsorption kinetics, the nanoplastic separation speed was slight affected, with complete removal of the nanoplastic from the aqueous matrix being achieved in 75 min.

After the nanoplastic separation process, the aqueous matrix remained completely clean, without any type of residue originating from either the nanoplastics or the carbon blacks.

***Example 6. Magnetic separation of polystyrene nanoplastics from an aqueous matrix by means of using black and subsequently adding magnetite***

Experiments for separating 140 nm polystyrene nanoplastics from an aqueous matrix were performed. The nanoplastics, with a purity of ≥99%, were supplied by the company MicroParticles GMBH. The separation process used was carried out using the commercial carbon black: Carbon black Vulcan XC72 (≥99%), supplied by the business entity Cabot. Table 1 shows the main properties of the carbon black in terms of particle size, specific surface, porous structure, point of zero charge, combustion temperature, and ash content. Likewise, Figure 1 shows the transmission electron microscopy images of the carbon black used in the separation experiments, as well as of the actual nanoplastics used. Figure 2 shows the particle size distribution of the carbon black used in the separation experiments. In the case of nanoplastics, the suspension had a monodisperse particle size of 140 nm. Figure 3 shows the Nz adsorption-desorption isotherms of the carbon black used in the separation experiments. Based on said isotherms, the specific surface and porous structure of said material were determined. Figure 4 shows the results of the thermogravimetric analyses of the carbon black, where the percentage of relative mass loss of each material (and also of the 140 nm polystyrene nanoplastics) is depicted as a function of temperature.

A magnetic iron mineral, i.e., ground magnetite (with a mean dry particle diameter of 0.2 μm and a particle size distribution as shown in Figure 11) was used to perform the process of separating nanoplastic/carbon black aggregates. The crystalline nature of the magnetite used was confirmed by means of an x-ray diffraction analysis which also showed that the only phase present in the solid is magnetite ($Fe_3O_4$). The percentage of iron in the magnetic mineral used was within the range of 68 - 78% by weight. In turn, the magnetic saturation value of the material was in the range of 70 to 90 emu $g^{-1}$, which corresponds with $70 \cdot 10^3$ to $90 \cdot 10^3$ A $m^{-1}$ in units of the International System.

The separation experiments were carried out in 50 mL Falcon tubes in which the aqueous matrix, polystyrene nanoplastics, and carbon black particles were introduced. Once the adsorption test has been completed, magnetite was added to the preceding suspension to facilitate the removal of all the solids from water by means of applying a magnetic field (magnet). Both the polystyrene nanoplastics and the carbon black particles remained in suspension in the aqueous matrix. The experiments were carried out at room temperature using deionized water the pH of which was not adjusted. All the experiments were performed in triplicate.

A 40 mL volume of aqueous matrix with a concentration of polystyrene nanoplastics of 40 mg $L^{-1}$ was used. There was added to said suspension 40 mg of the carbon black. Then, the Falcon vials containing the suspensions were placed under stirring in a Julabo SW22 orbital bath for 1 h at 25°C. Next, 40 mg of magnetite were added. The suspension was then mechanically stirred for 30 s using a paddle stirrer. A magnetic field generated with a magnet was then applied to separate the nanoplastic/carbon black/magnetic iron material aggregates from the aqueous matrix. Once the solids have been magnetically separated from the aqueous matrix, the total organic carbon was analyzed using a 20 mL volume. The same test was also performed, but in the absence of carbon black, to check whether magnetite alone will allow the separation of nanoplastics.
Table 7 shows the yields obtained in the separation of the 140 nm polystyrene nanoplastics from water with carbon black Cabot magnetically separated by means of adding magnetite.

Table 7

| Material | Separation yield (%) |
|---|---|
| Carbon black Cabot (plus magnetite for magnetic separation) | ≥99.9 |
| Magnetite | 6 |

Figure 12 shows a photograph of the suspension of polystyrene nanoplastics in deionized water (12.A), a photograph of the suspension of polystyrene nanoplastics and carbon black Cabot particles in deionized water (12.B), a photograph of the suspension of polystyrene nanoplastics and carbon black Cabot particles in deionized water after 1 h of contact and after the subsequent addition of magnetite (12.C), and a photograph of the suspension of polystyrene nanoplastics, carbon black Cabot particles, and magnetite particles in deionized water under the influence of a magnet (12.D).
Figure 13 shows a photograph of the suspension of polystyrene nanoplastics in deionized water (13.A), a photograph of the suspension of polystyrene nanoplastics and black magnetite particles in deionized water (13.B), and a photograph of the suspension of polystyrene nanoplastics and black magnetite particles in deionized water under the influence of a magnet (13.C).
As can be seen, the separation of polystyrene nanoplastics was extremely effective with the carbon black using magnetite for subsequent separation as a result of the application of a magnet, achieving mass recovery values above 99.9%. It is important to point out that, in this case, the adsorption capacity of the carbon black is not modified, as in the case of magnetized carbon black, so the maximum adsorption capacity thereof was identical to that of fresh material (426 mg $g^{-1}$). Similarly, the adsorption kinetics is not affected either. Moreover, it is important to point out that nanoplastic separation promoted by magnetite particles was practically negligible when no carbon black particles were added to the aqueous matrix.
After the process of magnetic separation, the aqueous matrix remained completely clean, without any type of residue originating from the nanoplastics, the carbon blacks, or the magnetite.

***Example 7. Regeneration of carbon black Cabot after the process of separating polystyrene nanoplastics from an aqueous matrix and reuse of the regenerated material in said system***

Regeneration experiments were carried out after using carbon black Cabot for separating polystyrene nanoplastics following the process described in Example 2 and using an initial concentration of nanoplastic of 100 mg $L^{-1}$. After the adsorption process, carbon black Cabot was introduced in 40 mL of acetone for 5 min and dried in an oven at 60°C for 12 h after being separated from the supernatant. Then, it was again used in the nanoplastic separation test, performing the same process up to three consecutive adsorption-regeneration cycles.
Table 8 shows the yields obtained in the separation of the 140 nm polystyrene nanoplastics from water in the three cycles performed.

Table 8

| Carbon black | Adsorption-regeneration cycle | Separation yield (%) |
|---|---|---|
| Carbon black Cabot | 1 | ≥99.9 |
| | 2 | 94.5 |
| | 3 | 91.0 |

As can be seen, the process of regenerating carbon black Cabot with acetone was extremely effective, achieving

yields above 90% in nanoplastic separation with the regenerated material even after three adsorption-regeneration cycles. It should be pointed out that the regeneration process allowed nanoplastics to be dissolved without modifying the properties of carbon black Cabot. Likewise, the process was also effective when magnetized carbon black Cabot was used, obtaining practically the same results as with fresh carbon black Cabot.

By way of example, Figure 14 shows the transmission electron microscopy image of magnetized carbon black Cabot after the polystyrene nanoplastic separation process before (14.A) and after (14.B) being subjected to treatment with acetone.

## Claims

1. A process for separating nanoplastics from aqueous matrices comprising nanoplastics, the process comprising:

   a) providing an aqueous matrix comprising nanoplastics,
   b) adding carbon black or magnetized carbon black particles to the aqueous matrix provided in step a) to form nanoplastic/carbon black or magnetized carbon black particle aggregates, and
   c) separating the nanoplastic/carbon black or magnetized carbon black particle aggregates from the mixture obtained in step b).

2. The process according to claim 1, wherein the size of the carbon black or magnetized carbon black particles is comprised between 10 and 80 nm.

3. The process according to any of claims 1 or 2, wherein the specific surface value of the carbon black or magnetized carbon black is comprised between 70 and 500 $m^2 g^{-1}$.

4. The process according to any of claims 1 to 3, wherein the point of zero charge value of the carbon black or magnetized carbon black is comprised between 4.0 and 12.

5. The process according to any of claims 1 to 4, wherein the weight of the carbon black or magnetized carbon black particles which is added to the aqueous matrix in step b) is 2 to 100 the weight of nanoplastics present in the aqueous matrix provided in step a).

6. The process according to any of claims 1 to 5, wherein the mean diameter of the nanoplastics is in the range of 100 nm to 900 nm.

7. The process according to any of claims 1 to 6, wherein the nanoplastics are polystyrene nanoplastics.

8. The process according to any of claims 1 to 7, wherein the addition of carbon black or magnetized carbon black particles to the aqueous matrix comprising nanoplastics of step b) is performed discontinuously or continuously.

9. The process according to any of claims 1 to 8, wherein the mixture obtained in step b) is subjected to stirring before performing step c), preferably wherein the stirring is of a mechanical, magnetic, or electrostatic type, more preferably of a mechanical type.

10. The process according to any of claims 1 to 9, wherein carbon black is used and wherein separation of the nanoplastic/carbon black particle aggregates from the aqueous matrix of step c) is performed by means of sedimentation or centrifugation.

11. The process according to any of claims 1 to 9, wherein magnetized carbon black is used and wherein separation of the nanoplastic/magnetized carbon black particle aggregates from the aqueous matrix of step c) is performed by means of applying a magnetic field.

12. The process according to any of claims 1 to 9, wherein carbon black is used and wherein separation of the nanoplastic/carbon black particle aggregates from the aqueous matrix of step c) further comprises the addition of a magnetic iron material to the aqueous matrix comprising the nanoplastic/carbon black particle aggregates and separation is performed by means of applying a magnetic field.

13. The process according to any of claims 1 to 12, wherein the carbon black or magnetized carbon black particles of

the nanoplastic/carbon black or magnetized carbon black particle aggregates separated in step c) are recovered to be reused.

**14.** The process according to claim 13, wherein recovery is performed by means of treating the aggregates with an organic solvent, preferably acetone, more preferably wherein the organic solvent used is acetone, using a nanoplastic/carbon black aggregate concentration or a nanoplastic/magnetized carbon black aggregate concentration of less than or equal to 25 g $L^{-1}$ and a contact time of at least 5 minutes.

**15.** The process according to claim 13, wherein recovery is performed by means of a heat treatment, preferably wherein the heat treatment comprises heating the nanoplastic/carbon black or magnetized carbon black particle aggregates separated in step c) in an air atmosphere to a temperature comprised between 300°C and 500°C at a speed comprised between 1 and 10°C $min^{-1}$.

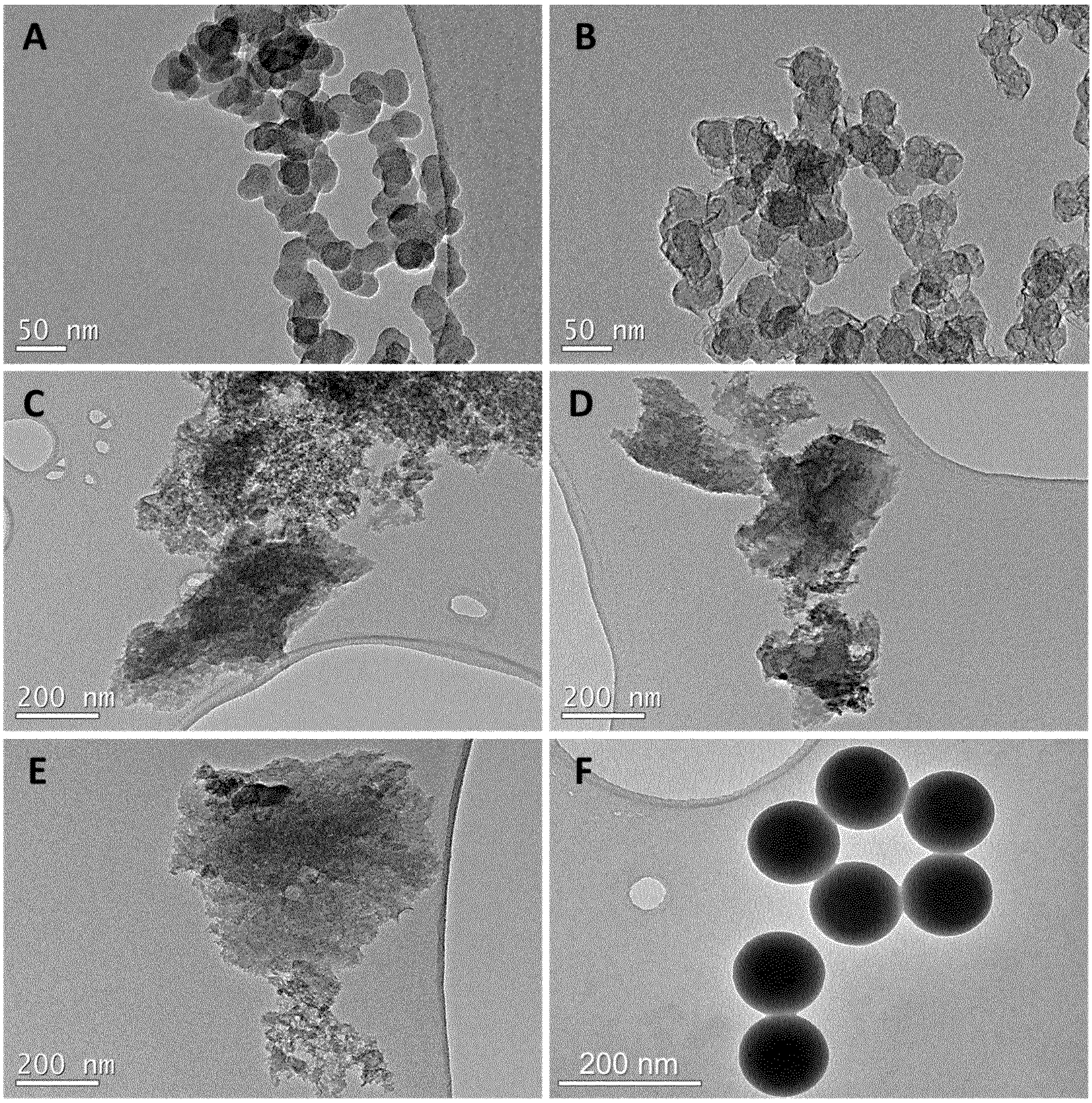


FIG. 1

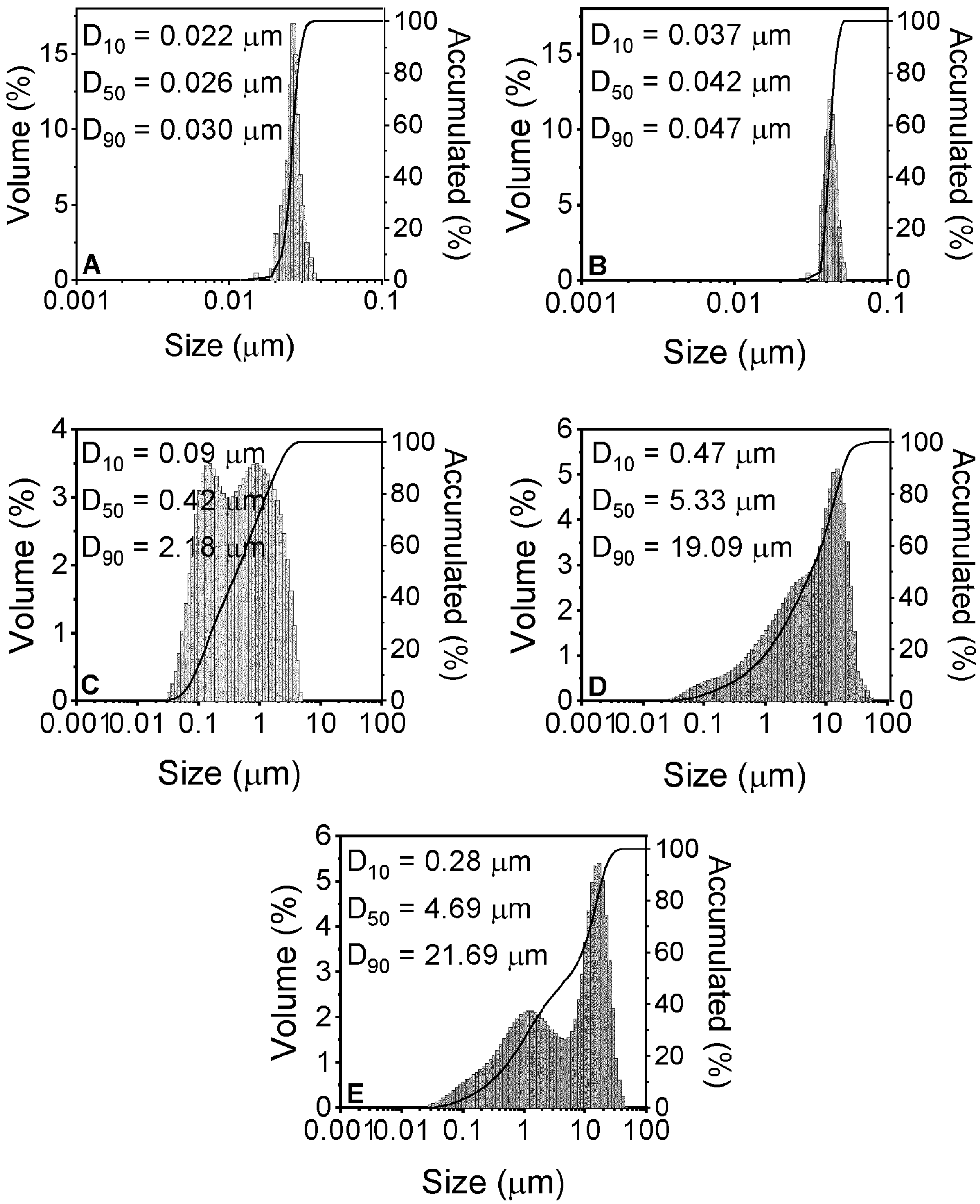
A
$D_{10}$ = 0.022 µm
$D_{50}$ = 0.026 µm
$D_{90}$ = 0.030 µm
B
$D_{10}$ = 0.037 µm
$D_{50}$ = 0.042 µm
$D_{90}$ = 0.047 µm
C
$D_{10}$ = 0.09 µm
$D_{50}$ = 0.42 µm
$D_{90}$ = 2.18 µm
D
$D_{10}$ = 0.47 µm
$D_{50}$ = 5.33 µm
$D_{90}$ = 19.09 µm
E
$D_{10}$ = 0.28 µm
$D_{50}$ = 4.69 µm
$D_{90}$ = 21.69 µm
Volume (%)
Accumulated (%)
Size (µm)

FIG. 2

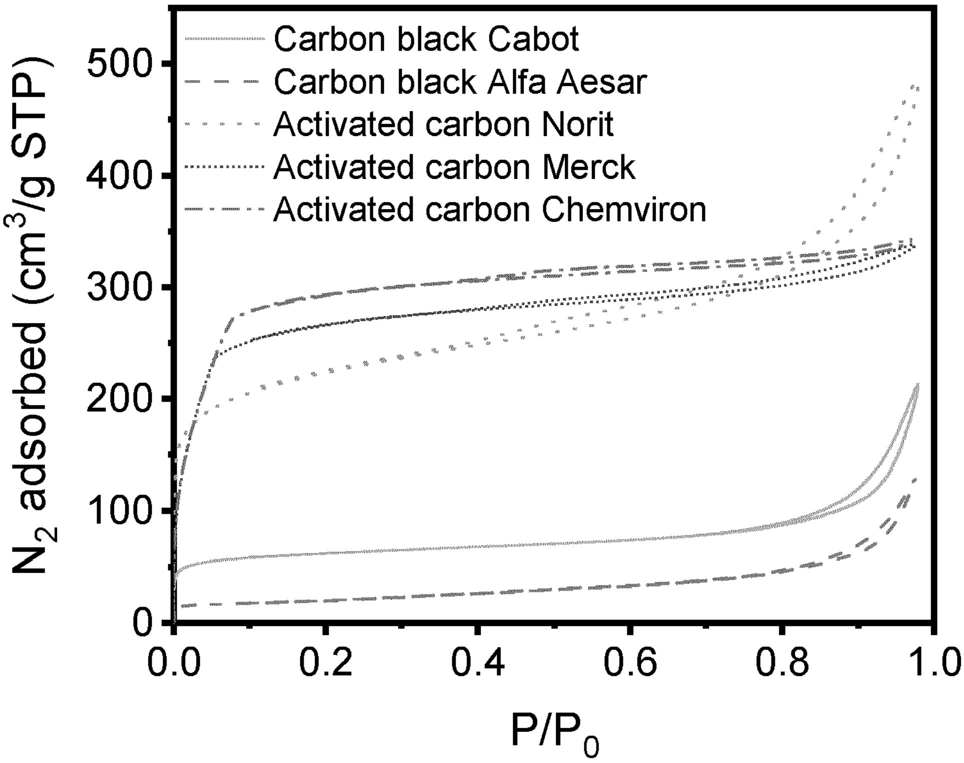
Carbon black Cabot
Carbon black Alfa Aesar
Activated carbon Norit
Activated carbon Merck
Activated carbon Chemviron
500
400
300
200
100
0
N2 adsorbed (cm3/g STP)
0.0
0.2
0.4
0.6
0.8
1.0
P/P0

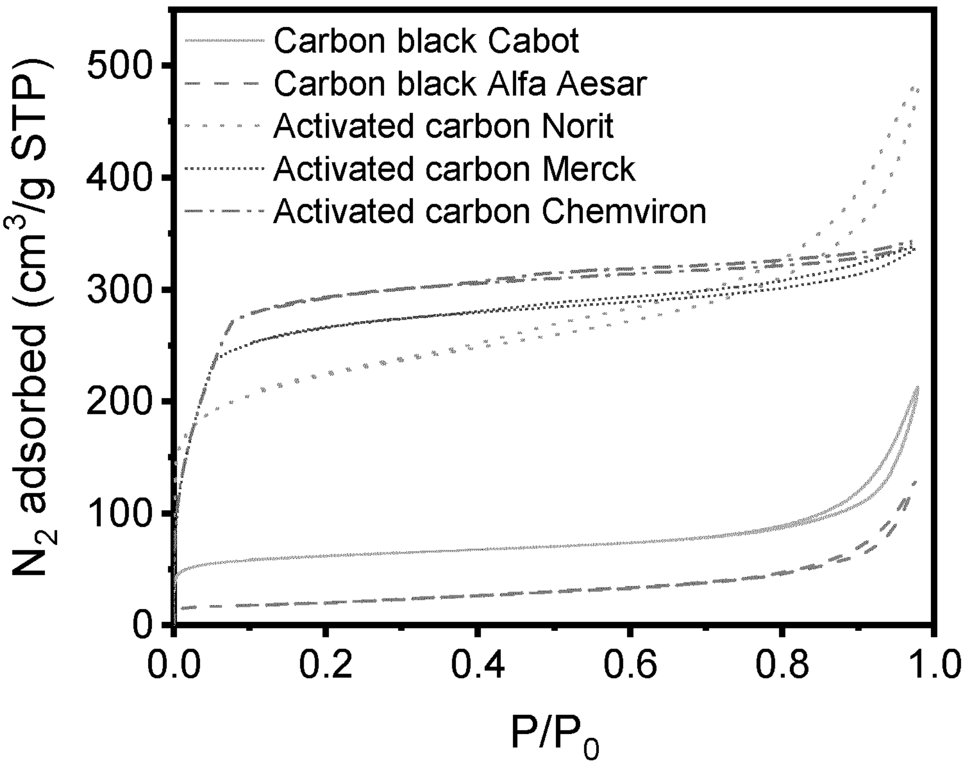
Carbon black Cabot
Carbon black Alfa Aesar
Activated carbon Norit
Activated carbon Merck
Activated carbon Chemviron
500
400
300
200
100
0
N2 adsorbed (cm3/g STP)
0.0
0.2
0.4
0.6
0.8
1.0
P/P0

FIG. 3

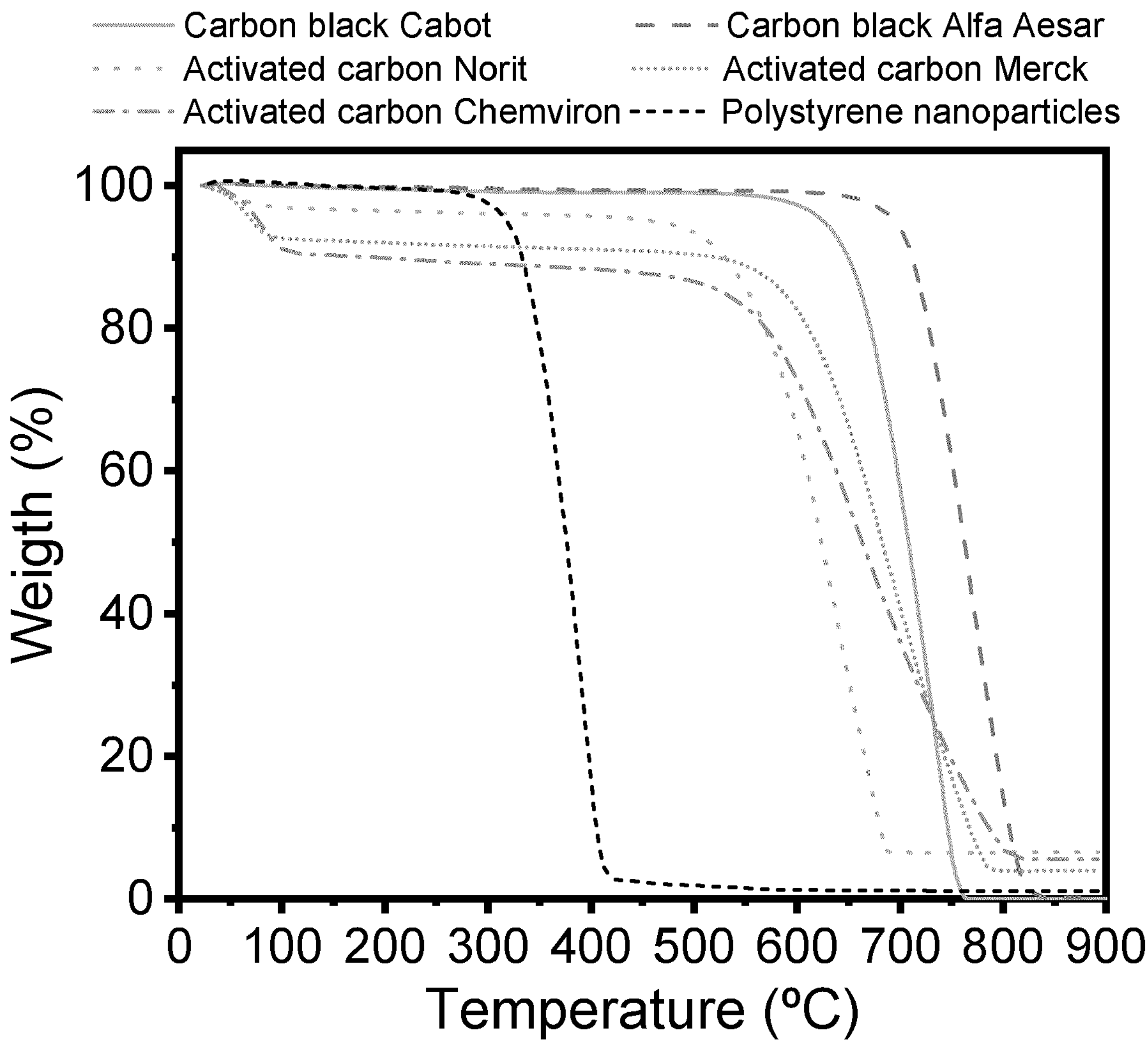
Carbon black Cabot
Carbon black Alfa Aesar
Activated carbon Norit
Activated carbon Merck
Activated carbon Chemviron
Polystyrene nanoparticles
Weigth (%)
100
80
60
40
20
0
0
100
200
300
400
500
600
700
800
900
Temperature (ºC)

FIG. 4

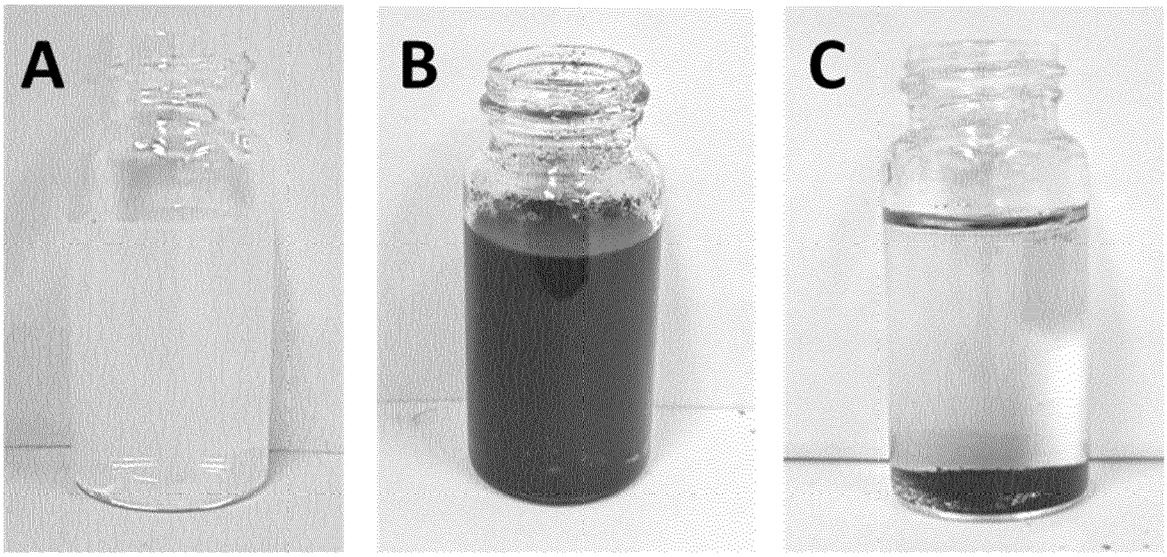
A
B
C

FIG. 5

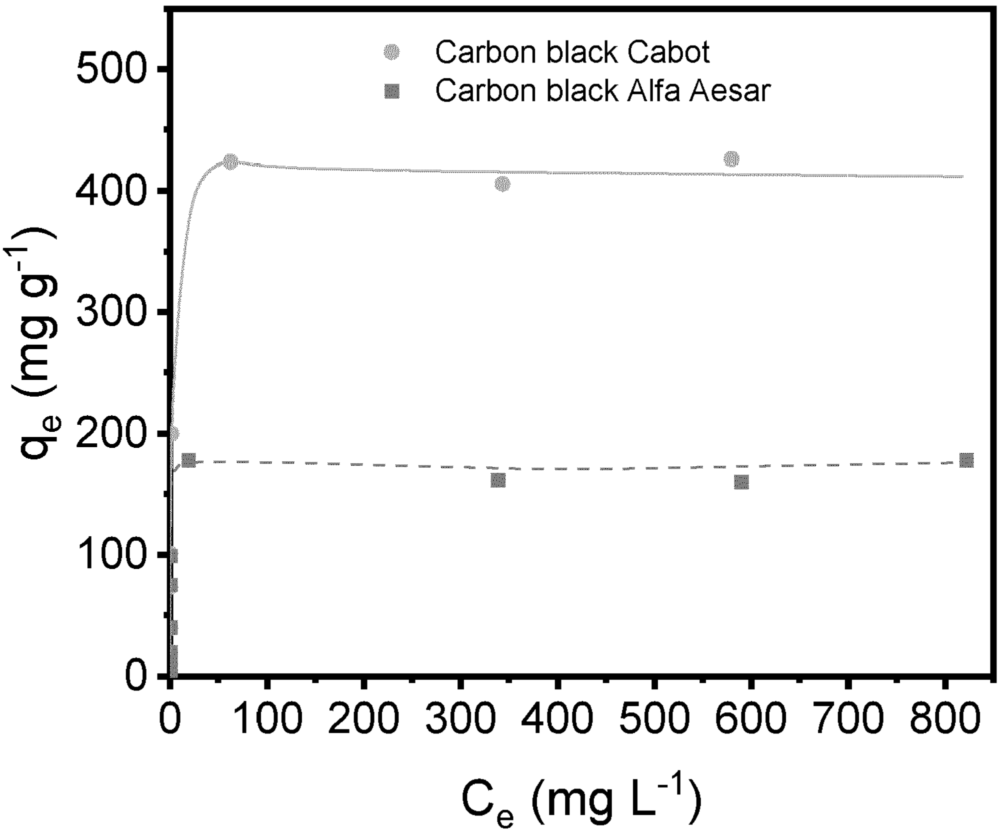
Carbon black Cabot
Carbon black Alfa Aesar
0
100
200
300
400
500
q_e (mg g^-1)
0
100
200
300
400
500
600
700
800
C_e (mg L^-1)

FIG. 6

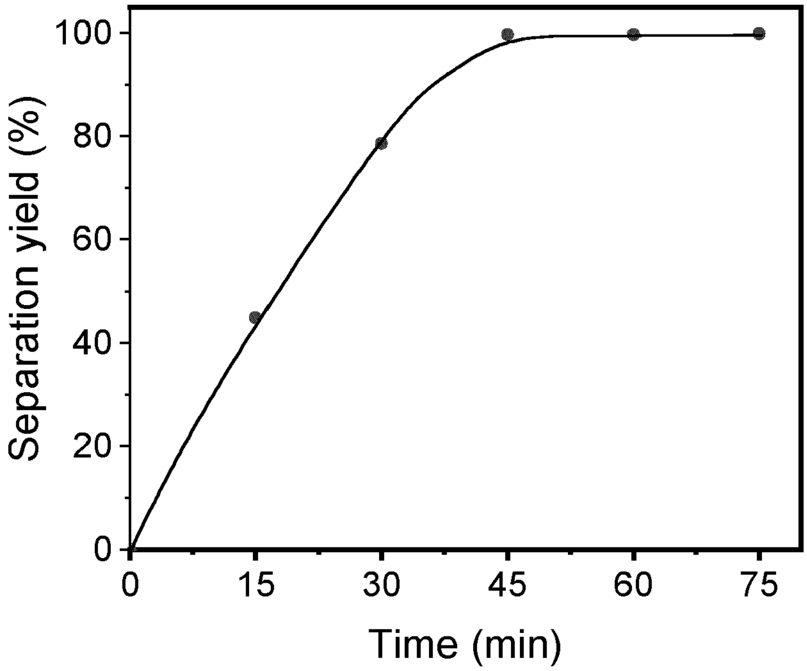


FIG. 7

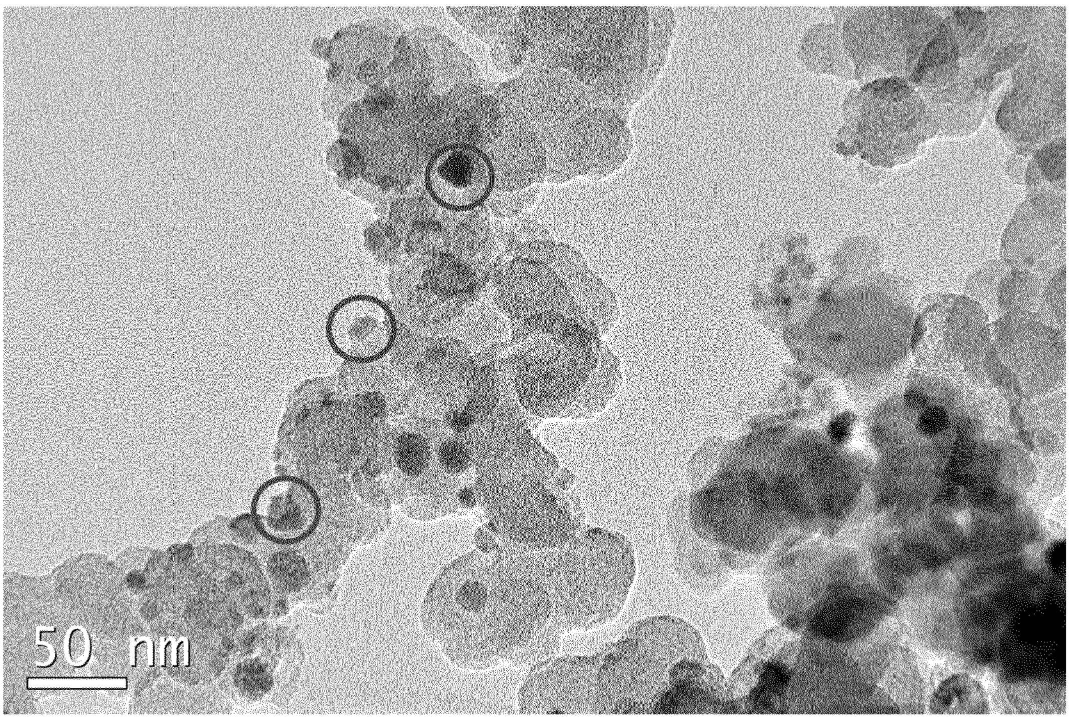


FIG. 8

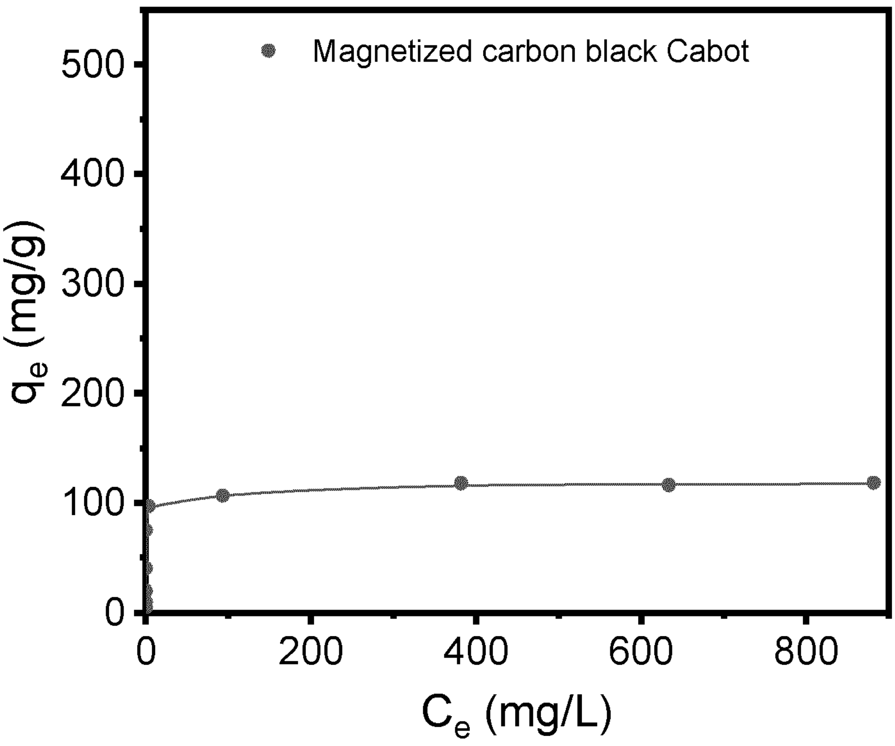
Magnetized carbon black Cabot
$q_e$ (mg/g)
$C_e$ (mg/L)
0
100
200
300
400
500
0
200
400
600
800

FIG. 9

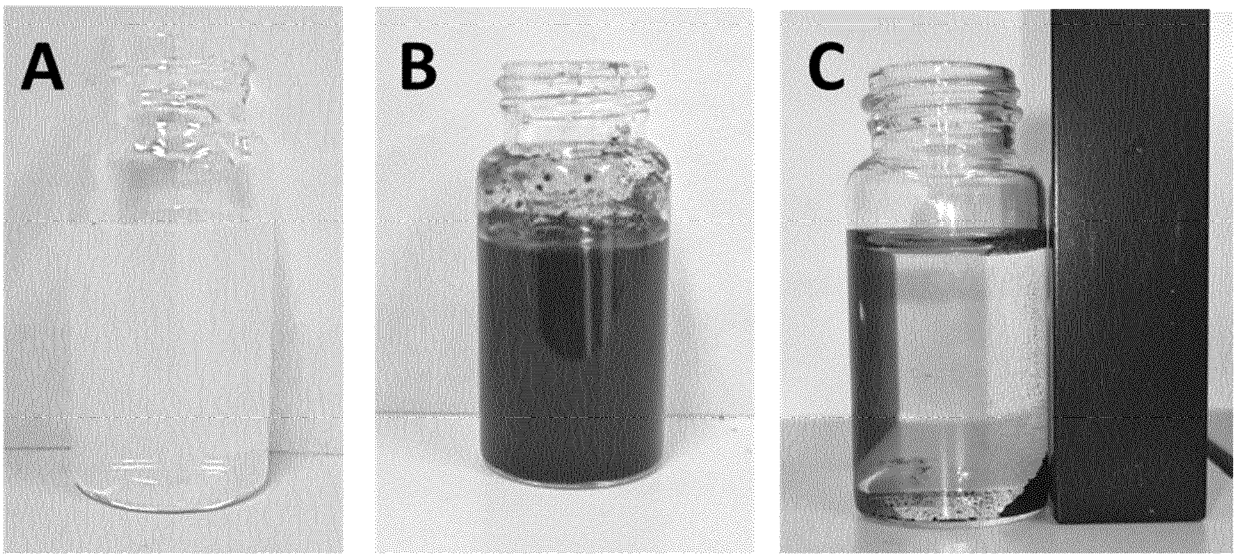
A
B
C

FIG. 10

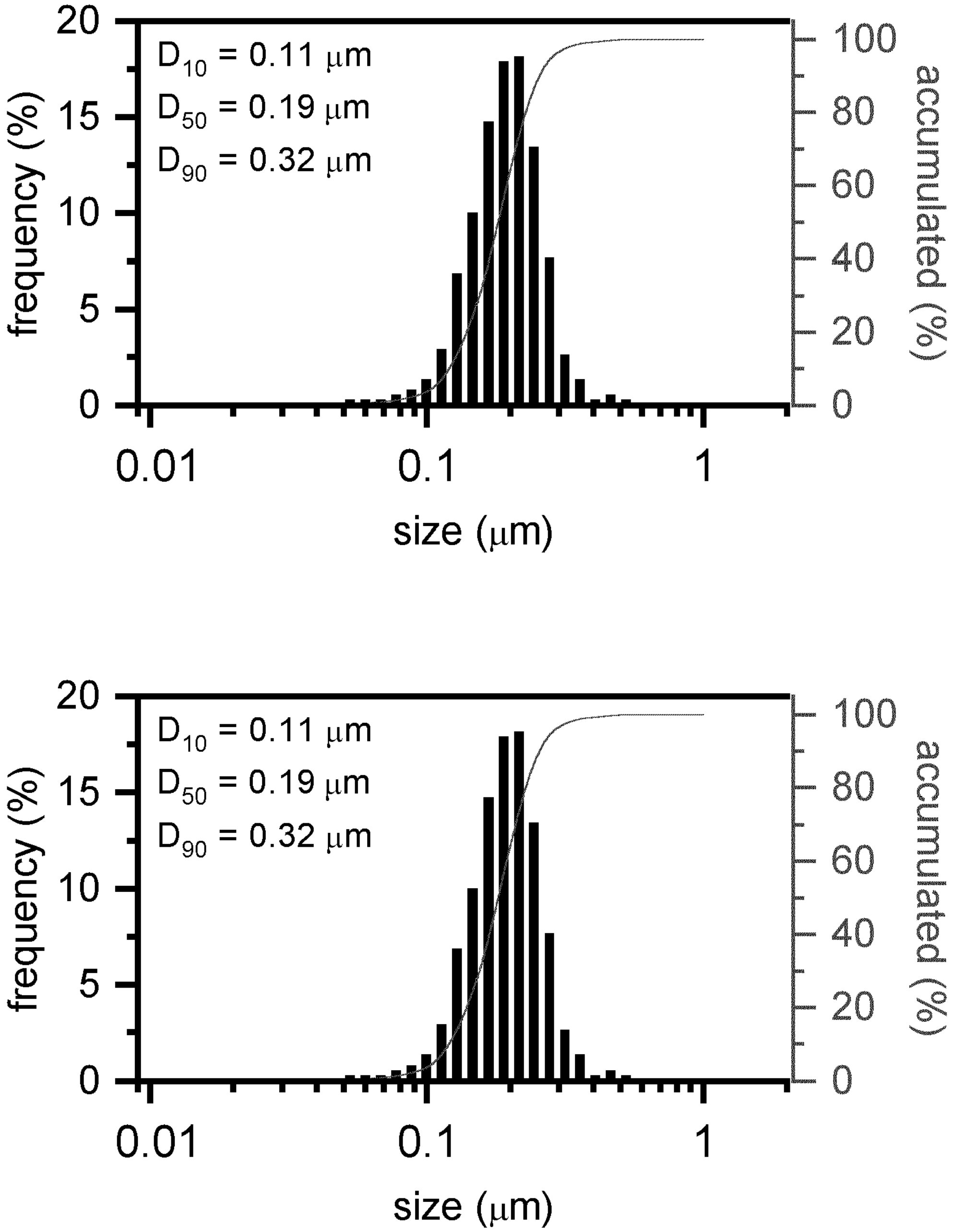
20
15
10
5
0
frequency (%)
D10 = 0.11 μm
D50 = 0.19 μm
D90 = 0.32 μm
100
80
60
40
20
0
accumulated (%)
0.01
0.1
1
size (μm)
20
15
10
5
0
frequency (%)
D10 = 0.11 μm
D50 = 0.19 μm
D90 = 0.32 μm
100
80
60
40
20
0
accumulated (%)
0.01
0.1
1
size (μm)

FIG. 11

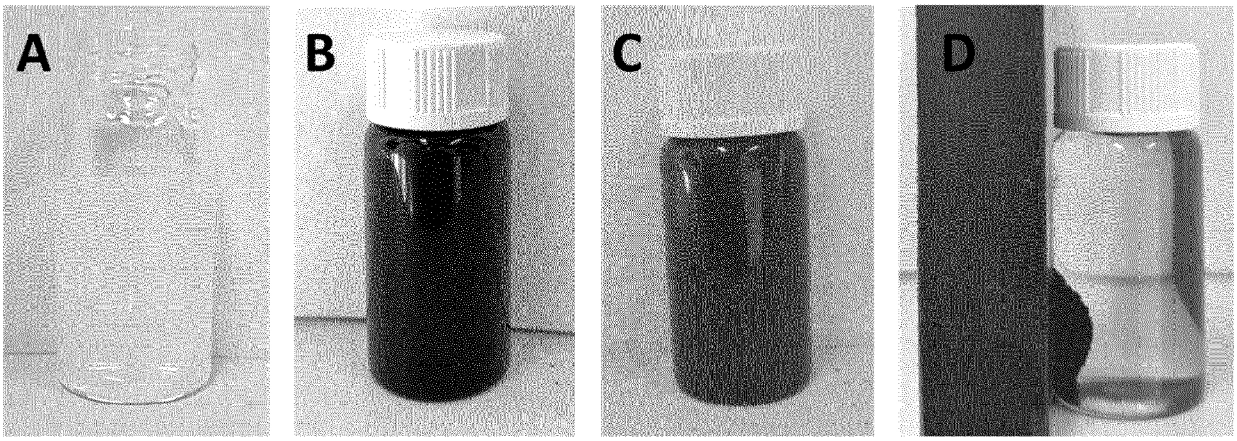


FIG. 12

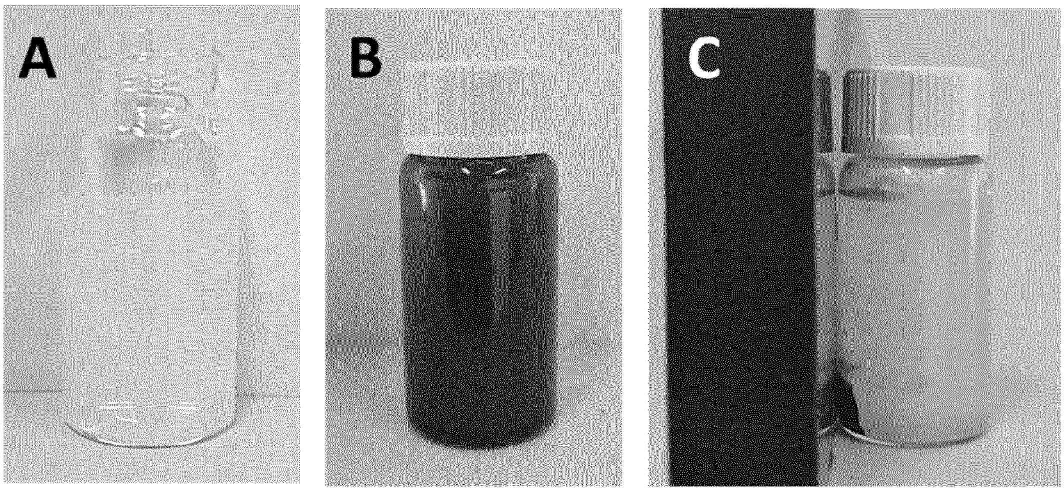


FIG. 13

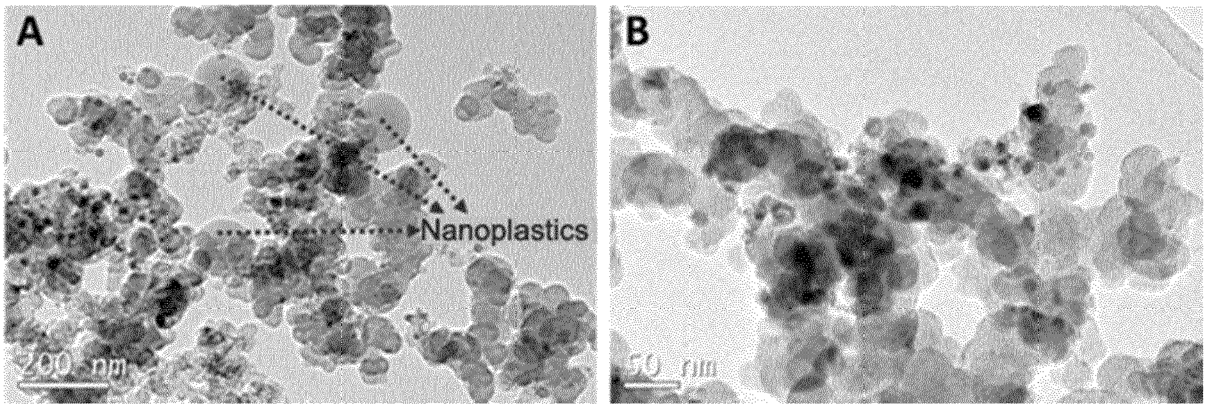


FIG. 14

Europäisches Patentamt
European Patent Office
Office européen des brevets

# EUROPEAN SEARCH REPORT

Application Number
EP 22 38 3121

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHAO HANGHANG ET AL: "Removal of polystyrene nanoplastics from aqueous solutions using a novel magnetic material: Adsorbability, mechanism, and reusability", CHEMICAL ENGENEERING JOURNAL, vol. 430, 22 October 2021 (2021-10-22), - 22 October 2021 (2021-10-22), page 133122, XP093025723, AMSTERDAM, NL ISSN: 1385-8947, DOI: 10.1016/j.cej.2021.133122 * pages 2,4 * * pages 10,11 * ----- | 1-15 | INV. C02F1/28 C02F1/48 B01J20/20 B01J20/28 B01J20/34 ADD. C02F1/38 C02F101/32 |
| X | WO 2020/142267 A1 (UNIV NORTHWESTERN [US]) 9 July 2020 (2020-07-09) | 1,8,13 | |
| A | * figure 3 * * paragraphs [0003], [0025] - [0030], [0045] - [0051], [0087] * ----- | 2-7, 9-12,14, 15 | |
| A | LOU LIPING ET AL: "Impact of black carbon originated from fly ash and soot on the toxicity of pentachlorophenol in sediment", JOURNAL OF HAZARDOUS MATERIALS, vol. 190, no. 1-3, 1 June 2011 (2011-06-01), pages 474-479, XP093025724, AMSTERDAM, NL ISSN: 0304-3894, DOI: 10.1016/j.jhazmat.2011.03.073 * the whole document * ----- | 1-15 | TECHNICAL FIELDS SEARCHED (IPC) C02F B01J |
| A | EP 3 978 446 A1 (UNIV MADRID AUTONOMA [ES]) 6 April 2022 (2022-04-06) * the whole document * ----- -/-- | 1-15 | |

The present search report has been drawn up for all claims

| Place of search | Date of completion of the search | Examiner |
|---|---|---|
| The Hague | 21 February 2023 | Rozanska, Agnieszka |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 3

Europäisches Patentamt
European Patent Office
Office européen des brevets

# EUROPEAN SEARCH REPORT

Application Number
EP 22 38 3121

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHOU GUANYU ET AL: "Removal of polystyrene nanoplastics from water by CuNi carbon material: The role of adsorption", SCIENCE OF THE TOTAL ENVIRONMENT, ELSEVIER, AMSTERDAM, NL, vol. 820, 18 January 2022 (2022-01-18), XP086988476, ISSN: 0048-9697, DOI: 10.1016/J.SCITOTENV.2022.153190 [retrieved on 2022-01-18] * the whole document * ----- | 1-15 | |
| A | CN 109 513 423 A (XIAMEN GENGNENG NEW MATERIAL TECH CO LTD) 26 March 2019 (2019-03-26) * the whole document * ----- | 1-15 | |
| A | KEERTHANA DEVI M ET AL: "Removal of nanoplastics in water treatment processes: A review", SCIENCE OF THE TOTAL ENVIRONMENT, ELSEVIER, AMSTERDAM, NL, vol. 845, 8 July 2022 (2022-07-08), XP087168947, ISSN: 0048-9697, DOI: 10.1016/J.SCITOTENV.2022.157168 [retrieved on 2022-07-08] * the whole document * ----- | 1-15 | TECHNICAL FIELDS SEARCHED (IPC) |
| | -/-- | | |

The present search report has been drawn up for all claims

| Place of search | Date of completion of the search | Examiner |
|---|---|---|
| The Hague | 21 February 2023 | Rozanska, Agnieszka |

1

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

Europäisches Patentamt
European Patent Office
Office européen des brevets

# EUROPEAN SEARCH REPORT

Application Number
EP 22 38 3121

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ENFRIN MARIE ET AL: "Nano/microplastics in water and wastewater treatment processes - Origin, impact and potential solutions", WATER RESEARCH, ELSEVIER, AMSTERDAM, NL, vol. 161, 15 September 2019 (2019-09-15), pages 621-638, XP085733354, ISSN: 0043-1354, DOI: 10.1016/J.WATRES.2019.06.049 [retrieved on 2019-06-20] * the whole document * ----- | 1-15 | |

TECHNICAL FIELDS SEARCHED (IPC)

The present search report has been drawn up for all claims

1

| Place of search | Date of completion of the search | Examiner |
|---|---|---|
| The Hague | 21 February 2023 | Rozanska, Agnieszka |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 3 of 3

## ANNEX TO THE EUROPEAN SEARCH REPORT ON EUROPEAN PATENT APPLICATION NO. EP 22 38 3121

This annex lists the patent family members relating to the patent documents cited in the above-mentioned European search report. The members are as contained in the European Patent Office EDP file on
The European Patent Office is in no way liable for these particulars which are merely given for the purpose of information.

21-02-2023

| Patent document cited in search report | Publication date | Patent family member(s) | Publication date |
|---|---|---|---|
| WO 2020142267 A1 | 09-07-2020 | EP 3906112 A1 | 10-11-2021 |
| | | EP 3906215 A1 | 10-11-2021 |
| | | US 2022059839 A1 | 24-02-2022 |
| | | US 2022118422 A1 | 21-04-2022 |
| | | WO 2020142261 A1 | 09-07-2020 |
| | | WO 2020142267 A1 | 09-07-2020 |
| EP 3978446 A1 | 06-04-2022 | EP 3978446 A1 | 06-04-2022 |
| | | ES 2796998 A1 | 30-11-2020 |
| | | US 2022226834 A1 | 21-07-2022 |
| | | WO 2020240069 A1 | 03-12-2020 |
| CN 109513423 A | 26-03-2019 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- ES 2796998 A1
- WO 2020240069 A1, Munoz, M.


### Non-patent literature cited in the description


- *PlasticsEurope, Plastics - The facts 2021, Report,* 2021
- *GESAMP Report and Studies,* 2015, vol. 90, ISSN 1020-4873
- **ENFRIN, M. et al.** *Water Research,* 2019, vol. 161, 621-638
- **FORREST, A. et al.** *Frontiers in Marine Science,* 2019, vol. 6, 627
- **HERNANDEZ, L.M. et al.** *Environmental Science and Technology Letters,* 2017, vol. 4, 280-285
- **LEHNER, R. et al.** *Environmental Science and Technology,* 2019, vol. 53, 1748-1765
- **GAYLARDE, C.C. et al.** *Environmental Pollution,* 2021, vol. 272, 115950
- **HUANG, D. et al.** *Journal of Hazardous Materials,* 2021, vol. 407, 124399
- **SONG, Z. et al.** *Science of the Total Environment,* 2019, vol. 669, 120-128
- **WU, J. et al.** *Chemosphere,* 2021, vol. 263, 127967
- **SALEH, T.A.** *Environmental Technology and Innovation,* 2020, vol. 20, 101067
- **ZHANG, B. et al.** *Science of the Total Environment,* 2021, vol. 757, 143791
- **ESTRELA, F.N. et al.** *Chemosphere,* 2021, vol. 271, 129476
- **SOL, D. et al.** *Science of the Total Environment,* 2020, vol. 740, 140016
- **ALI et al.** *Chemical Engineering Journal,* 2021, vol. 423, 130205
- **XU, Z. et al.** *Journal of Cleaner Production,* 2021, vol. 291, 125982
- **ALI, I. et al.** *Chemical Engineering Journal,* 2021, vol. 423, 130205
- **KARIMI ESTAHBANATI, M.R. et al.** *Marine Pollution Bulletin,* 2021, vol. 168, 112374
- **DEVI, M.K. et al.** *Science of the Total Environment,* 2022, vol. 845, 157168
- **BATOOL, A. et al.** *Journal of Hazardous Materials,* 2021, vol. 413, 125301
- **ZHANG, Y. et al.** *Water Research,* 2020, vol. 178, 115861
- **LI, Q. et al.** *Nature Scientific Reports,* 2017, vol. 7, 9894
- **ZHAO, H. et al.** *Chemical Engineering Journal,* 2022, vol. 430, 133122
- **RAMÍREZ-ARENAS, L. et al.** *Science of the Total Environment,* 2021, vol. 791, 148175
- **YEN, P.L. et al.** *Chemosphere,* 2022, vol. 286, 131863
- **ABDOUL, A.S.I. et al.** *Science of the Total Environment,* 2021, vol. 784, 147115
- **GANIE, Z.A. et al.** *Journal of Hazardous Materials,* 2021, vol. 417, 126096
- **ZHU, N. et al.** *Journal of Hazardous Materials,* 2022, vol. 433, 128756
- **ZHOU, G. et al.** *Science of the Total Environment,* 2022, vol. 820, 153190
- **TIWARI, E. et al.** *Journal of Hazardous Materials,* 2020, vol. 397, 122769
- **BATOOL, A. ; VALIYAVEETTIL, S.** *Journal of Hazardous Materials,* 2021, vol. 413, 125301
- **STAVROPOULOS, G.G. et al.** *Journal of Hazardous Materials,* 2008, vol. 151 (2-3), 414-421
- **MIAO, Q. et al.** *Journal of the Taiwan Institute of Chemical Engineers,* 2013, vol. 44, 458-465
- **MOJOUDI, N. et al.** *Nature Scientific Reports,* 2019, vol. 9, 19352
- **RAMIREZ-ARENAS, L. et al.** *Science of the Total Environment,* 2021, vol. 791, 148175
- **BRUNAUER, S. et al.** *Journal of American Chemical Society,* 1938, vol. 60, 309-319
- **SING, K.S.W. et al.** *Pure and Applied Chemistry,* 1985, vol. 57, 603-619
- **MAILLER, R. et al.** *Journal of Environmental Chemical Engineering,* 2016, vol. 4, 1102-1109